# EUROPEAN PATENT APPLICATION

(11) **EP 4 842 054 A1**
(43) Date of publication of application: **18.11.2026**
(21) Application number: 24915944.3
(22) Date of filing: 09.01.2024
(51) Int. Cl.: H04W 36/00

(54) **METHOD FOR WIRELESS COMMUNICATION AND WIRELESS COMMUNICATION DEVICE**

(71) Applicant: Shenzhen TCL New Technology Co., Ltd., Shenzhen, Guangdong 518000 (CN)
(72) Inventor: CHEN, Zhe, Shenzhen, Guangdong 518000 (CN)
(74) Representative: Herrero & Asociados, S.L.
(86) International application number: PCT/CN2024/071448
(87) International publication number: WO 2025/147863

(57) **Abstract**

Embodiments of the present application provide a method for wireless communication and a wireless communication device. The method is executed by a user equipment (UE). The method comprises: by means of a first message, sending to at least one network node first prediction measurement information predicted by the UE on the basis of an artificial intelligence/machine learning (AI/ML) model. The first prediction measurement information is mobility information of the UE at a future moment, and the mobility information of the UE at a future moment comprises at least one of the following pieces of information: AI/ML model identification information, handover node identification information, handover node access resource information, handover node access resource validity information, handover node access resource prediction accuracy information, a predicted measurement result, a predicted additional measurement result, a predicted neighboring cell handover beam, and a predicted measurement result time, and/or accuracy.

## Description

### TECHNICAL FIELD

Embodiments of the present application relate to the field of mobile communication technologies, and more particularly, to a method for wireless communication and a wireless communication device.

### BACKGROUND TECHNOLOGY

In the related art, artificial intelligence/machine learning (AI/ML) can be used to implement systems capable of performing tasks that would otherwise require human effort through computational learning. AI/ML may be applied to solve various problems, such as natural language processing, computation, image processing, and the like. In recent years, AI/ML has been increasingly applied in the field of communications. However, there remain unresolved issues regarding the application of AI/ML to mobility enhancement in communication systems. Accordingly, there is a need for a method for wireless communication and a wireless communication device to address the foregoing issues as well as other issues existing in the related art.

### SUMMARY OF INVENTION

Embodiments of the present application provide a method for wireless communication and a wireless communication device.

According to an embodiment of the present application, a method for wireless communication is provided. The method is performed by a user equipment (UE) and comprises: transmitting, to at least one network node via a first message, first prediction measurement information predicted by the UE based on an artificial intelligence/machine learning (AI/ML) model, wherein the first prediction measurement information comprises mobility information of the UE at a future time, and wherein the mobility information of the UE at the future time comprises at least one of: AI/ML model identification information, handover node identification information, handover node access resource information, handover node access resource validity information, handover node access resource prediction accuracy information, a predicted measurement result, a predicted additional measurement result, a predicted neighboring-cell handover beam, a predicted measurement result time, and/or accuracy information.

According to the foregoing technical solution, the UE transmits, to at least one network node, first prediction measurement information predicted based on an AI/ML model, wherein the first prediction measurement information comprises mobility information of the UE at a future time. Accordingly, an AI/ML algorithm may be utilized to predict a UE movement trajectory, thereby enabling more efficient wireless resource allocation and mobility management for the UE.

According to another embodiment of the present application, a method for wireless communication is provided. The method is performed by a user equipment (UE) and comprises: receiving, from at least one network node, UE trajectory prediction information predicted by the at least one network node based on an artificial intelligence/machine learning (AI/ML) model, wherein the UE trajectory prediction information comprises at least one of: UE identification information, a predicted UE radio resource management (RRM) measurement result, a predicted measurement result time, prediction accuracy information, node information, node access resource information, node access resource validity information, and/or node access resource prediction accuracy information.

According to the foregoing technical solution, the UE receives UE trajectory prediction information predicted by the at least one network node based on an AI/ML model. Accordingly, an AI/ML algorithm may be utilized to predict a UE movement trajectory, thereby enabling more efficient wireless resource allocation and mobility management for the UE.

According to another embodiment of the present application, a method for wireless communication is provided. The method is performed by at least one network node and comprises: receiving, via a first message from a user equipment (UE), first prediction measurement information predicted by the UE based on an artificial intelligence/machine learning (AI/ML) model, wherein the first prediction measurement information comprises mobility information of the UE at a future time, and wherein the mobility information of the UE at the future time comprises at least one of: AI/ML model identification information, handover node identification information, handover node access resource information, handover node access resource validity information, handover node access resource prediction accuracy information, a predicted measurement result, a predicted additional measurement result, a predicted neighboring-cell handover beam, a predicted measurement result time, and/or accuracy information.

According to the foregoing technical solution, the at least one network node receives first prediction measurement information predicted by the UE based on an AI/ML model, wherein the first prediction measurement information comprises mobility information of the UE at a future time. Accordingly, an AI/ML algorithm may be utilized to predict a UE movement trajectory, thereby enabling more efficient wireless resource allocation and mobility management for the UE.

According to another embodiment of the present application, a method for wireless communication is provided. The method is performed by at least one network node and comprises: transmitting, to a user equipment (UE), UE trajectory prediction information predicted by the at least one network node based on an artificial intelligence/machine learning (AI/ML) model, wherein the UE trajectory prediction information comprises at least one of: UE identification information, a predicted UE radio resource management (RRM) measurement result, a predicted measurement result time, prediction accuracy information, node information, node access resource information, node access resource validity information, and/or node access resource prediction accuracy information.

According to the foregoing technical solution, the at least one network node transmits, to the UE, UE trajectory prediction information predicted based on an artificial intelligence/machine learning (AI/ML) model. Accordingly, an AI/ML algorithm may be utilized to predict a UE movement trajectory, thereby enabling more efficient wireless resource allocation and mobility management for the UE.

According to an embodiment of the present application, a wireless communication device is provided. The wireless communication device comprises: a processor; and a memory configured to store computer programs, wherein the processor is configured to invoke and execute the computer programs stored in the memory to perform the wireless communication method described above.

According to an embodiment of the present application, a user equipment (UE) is provided. The UE comprises: a processor; and a memory configured to store computer programs, wherein the processor is configured to invoke and execute the computer programs stored in the memory to perform the wireless communication method described above.

According to an embodiment of the present application, a base station is provided. The base station comprises: a processor; and a memory configured to store computer programs, wherein the processor is configured to invoke and execute the computer programs stored in the memory to perform the wireless communication method described above.

According to an embodiment of the present application, a network node is provided. The network node comprises: a processor; and a memory configured to store computer programs, wherein the processor is configured to invoke and execute the computer programs stored in the memory to perform the wireless communication method described above.

According to an embodiment of the present application, a chip is provided for implementing the wireless communication method described above.

In some implementations, the chip comprises: a processor configured to invoke and execute computer programs from a memory, such that a device in which the chip is installed performs the wireless communication method described above.

According to an embodiment of the present application, a computer-readable storage medium is provided for storing computer programs that, when executed, cause a computer to perform the wireless communication method described above.

According to an embodiment of the present application, a computer program product is provided, comprising computer program instructions that, when executed, cause a computer to perform the wireless communication method described above.

According to an embodiment of the present application, a computer program is provided, which, when executed by a computer, causes the computer to perform the wireless communication method described above.

According to the foregoing technical solutions, the UE transmits, to at least one network node, first prediction measurement information predicted by the UE based on an artificial intelligence/machine learning (AI/ML) model, wherein the first prediction measurement information comprises mobility information of the UE at a future time. Further, the UE receives, from at least one network node, UE trajectory prediction information predicted by the at least one network node based on an artificial intelligence/machine learning (AI/ML) model. Accordingly, an AI/ML algorithm may be utilized to predict a UE movement trajectory, thereby enabling more efficient wireless resource allocation and mobility management for the UE.

### BRIEF DESCRIPTION OF THE DRAWINGS

The accompanying drawings, which are incorporated herein and constitute a part of the present application, illustrate exemplary embodiments of the present application and, together with the description, serve to explain the principles of the present application. The drawings and the associated descriptions are provided for purposes of illustration only and are not intended to unduly limit the scope of the present application. In the drawings:
FIG. 1 is a schematic diagram illustrating a wireless communication system architecture according to an embodiment of the present application.
FIG. 2A is a flowchart illustrating a method for wireless communication according to an embodiment of the present application.
FIG. 2B is a flowchart illustrating a method for wireless communication according to an embodiment of the present application.
FIG. 2C is a flowchart illustrating a method for wireless communication according to an embodiment of the present application.
FIG. 2D is a flowchart illustrating a method for wireless communication according to an embodiment of the present application.
FIG. 2E is a flowchart illustrating a method for wireless communication according to an embodiment of the present application.
FIG. 2F is a flowchart illustrating a method for wireless communication according to an embodiment of the present application.
FIG. 2G is a flowchart illustrating a method for wireless communication according to an embodiment of the present application.
FIG. 3A is a flowchart illustrating a method for wireless communication according to an embodiment of the present application.
FIG. 3B is a flowchart illustrating a method for wireless communication according to an embodiment of the present application.
FIG. 3C is a schematic diagram illustrating a method for wireless communication according to an embodiment of the present application.
FIG. 4A is a flowchart illustrating a method for wireless communication according to an embodiment of the present application.
FIG. 4B is a flowchart illustrating a method for wireless communication according to an embodiment of the present application.
FIG. 4C is a schematic diagram illustrating a method for wireless communication according to an embodiment of the present application.
FIG. 4D is a schematic diagram illustrating a method for wireless communication according to an embodiment of the present application.
FIG. 5A is a flowchart illustrating a method for wireless communication according to an embodiment of the present application.
FIG. 5B is a flowchart illustrating a method for wireless communication according to an embodiment of the present application.
FIG. 6 is a flowchart illustrating a method for wireless communication according to an embodiment of the present application.
FIG. 7 is a schematic structural diagram of a wireless communication device according to an embodiment of the present application.
FIG. 8 is a schematic structural diagram of a chip according to an embodiment of the present application.
FIG. 9 is a schematic block diagram illustrating a wireless communication system according to an embodiment of the present application.

### DETAILED DESCRIPTION OF THE PREFERRED EMBODIMENTS

The technical solutions of the embodiments of the present application will be described below with reference to the accompanying drawings. It should be understood that the described embodiments are merely some embodiments of the present application rather than all embodiments. Based on the embodiments disclosed herein, all other embodiments that may be derived by a person having ordinary skill in the art without inventive effort shall fall within the scope of the present application.

The technical solutions of the embodiments of the present application may be applied to various wireless communication systems, such as a Long Term Evolution (LTE) system, an LTE Frequency Division Duplex (FDD) system, an LTE Time Division Duplex (TDD) system, a fifth-generation (5G) communication system, and future wireless communication systems.

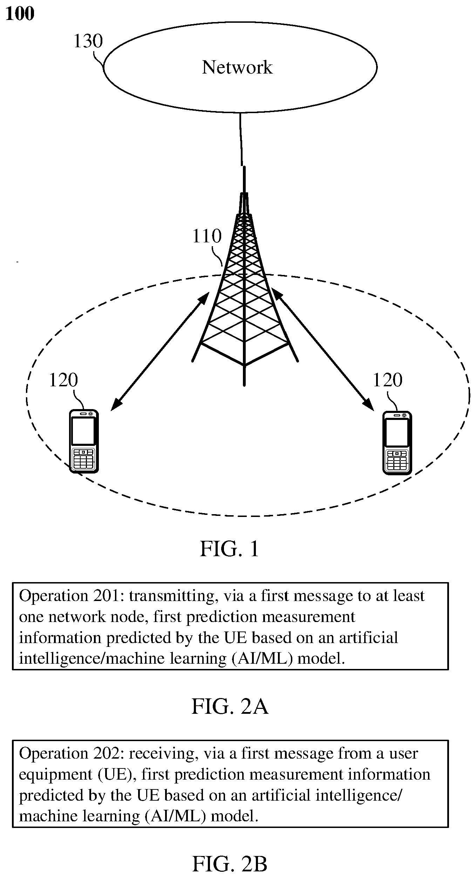

By way of example, a wireless communication system 100 according to an embodiment of the present application is illustrated in FIG. 1. The wireless communication system 100 may include a base station 110. The base station 110 may be a device that communicates with a user equipment (UE) 120. The base station 110 may provide communication coverage for a particular geographic area and may communicate with UEs located within the coverage area. Optionally, the base station 110 may be an evolved Node B (eNB or eNodeB) in an LTE system. Alternatively, the base station 110 may be a mobile switching center, a relay station, an access point, an in-vehicle device, a wearable device, a hub, a switch, a bridge, a router, a network-side device in a 5G network, a base station in a future communication system, or the like.

The wireless communication system 100 may further include at least one UE 120 located within the coverage area of the base station 110. As used herein, the term "user equipment" (UE) includes, but is not limited to, devices configured to receive and/or transmit communication signals via wired connections, such as a Public Switched Telephone Network (PSTN), a Digital Subscriber Line (DSL), digital cable, direct cable connections, and/or other data connections or networks; and/or via wireless interfaces, such as cellular networks, Wireless Local Area Networks (WLANs), digital television networks (e.g., DVB-H networks), satellite networks, AM/FM broadcast transmitters, and/or communication links with other UEs. A UE configured for wireless communication may also be referred to as a wireless communication terminal, wireless terminal, or mobile terminal. Examples of mobile terminals include, but are not limited to, satellite telephones, cellular telephones, Personal Communications System (PCS) terminals combining cellular telephony with data processing, facsimile, and data communication capabilities, personal digital assistants (PDAs) including wireless telephony, paging, Internet/Intranet access, web browsing, notebook, calendar, and/or Global Positioning System (GPS) functions, conventional laptop and/or handheld devices, and other electronic devices incorporating radio transceivers. The UE may also be referred to as an access terminal, user unit, user station, mobile station, remote station, remote user terminal, mobile device, wireless communication device, or user agent. The access terminal may be a cellular telephone, a cordless telephone, a Session Initiation Protocol (SIP) telephone, a Wireless Local Loop (WLL) station, a Personal Digital Assistant (PDA), a handheld device having wireless communication capability, a computing device, another processing device connected to a wireless modem, an in-vehicle device, a wearable device, a UE in a 5G network, a UE in a future evolved Public Land Mobile Network (PLMN), or the like.

In some embodiments of the present disclosure, the UE 120 transmits, to the base station 110, first prediction measurement information predicted by the UE 120 based on an artificial intelligence/machine learning (AI/ML) model, wherein the first prediction measurement information comprises mobility information of the UE 120 at a future time. Accordingly, an AI/ML algorithm may be utilized to predict a movement trajectory of the UE 120, thereby enabling more efficient wireless resource allocation and mobility management for the UE 120.

In some embodiments of the present disclosure, the UE 120 receives, from the base station 110, UE trajectory prediction information predicted by the base station 110 based on an artificial intelligence/machine learning (AI/ML) model. Accordingly, an AI/ML algorithm may be utilized to predict a movement trajectory of the UE 120, thereby enabling more efficient wireless resource allocation and mobility management for the UE 120.

In some embodiments of the present disclosure, the UE 120 transmits, to the base station 110, first prediction measurement information predicted by the UE 120 based on an artificial intelligence/machine learning (AI/ML) model, and receives, from the base station 110, UE trajectory prediction information predicted by the base station 110 based on an artificial intelligence/machine learning (AI/ML) model. Accordingly, an AI/ML algorithm may be utilized to predict a movement trajectory of the UE 120, thereby enabling more efficient wireless resource allocation and mobility management for the UE 120.

Optionally, Device-to-Device (D2D) communication may be performed between UEs 120.

Optionally, a 5G communication system or 5G network may also be referred to as a New Radio (NR) system or NR network.

The wireless communication system 100 may further include a network 130. The network 130 may be an IP-based mobile communication network operated by a mobile communication operator. For example, the network 130 may be a core network operated by a mobile communication operator for managing and operating the wireless communication system 100. Alternatively, the network 130 may be a core network operated by a virtual mobile communication operator, such as a Mobile Virtual Network Operator (MVNO).

The network 130 may be connected to the base station 110 and may function as a relay entity for transmitting user data. The UE 120 may transmit and receive user data via the network 130. It should be noted that user-data communications are not limited to IP communications and may also include non-IP communications.

FIG. 1 illustrates, by way of example, one base station 110, two UEs 120, and a network 130. Optionally, the wireless communication system 100 may include multiple base stations, and each base station may provide coverage for any suitable number of UEs. Embodiments of the present application are not limited in this regard.

Multiple base stations may be included, such as a first base station and a second base station. For example, the first base station may be a source base station, and the second base station may be a target base station. In some embodiments of the present disclosure, second prediction measurement information is transmitted from the source base station to the target base station, wherein the second prediction measurement information comprises mobility information of the UE 120 at a future time. Accordingly, an AI/ML algorithm may be utilized to predict a movement trajectory of the UE 120, thereby enabling more efficient wireless resource allocation and mobility management for the UE 120.

Optionally, the wireless communication system 100 may further include other network entities, such as a network controller, a mobility management entity, and/or network elements. Embodiments of the present application are not limited in this regard. For example, the network 130 may include a network controller, a mobility management entity, and/or other network entities.

It should be understood that devices having wireless communication functionality in the network/system described herein may be referred to as wireless communication devices. Taking the wireless communication system 100 illustrated in FIG. 1 as an example, wireless communication devices may include the base station 110, the UE 120, and the network 130. The base station 110 and the UE 120 may correspond to the devices described above and will not be repeated herein. Wireless communication devices may further include other devices in the wireless communication system 100, such as the network 130, which may include a network controller, a mobility management entity, and/or other network entities. Embodiments of the present application are not limited in this regard.

It should be understood that the terms "system" and "network" may be used interchangeably herein. The term "and/or" is used to describe an association relationship between associated objects and indicates that one of three relationships may exist. For example, "A and/or B" may mean: A alone, both A and B, or B alone. In addition, the symbol "/" generally indicates an "or" relationship between associated objects.

For ease of understanding, related technical solutions of embodiments of the present application are described below.

First Embodiment: UE Reports First Prediction Measurement Information Predicted by an AI/ML Model.

FIG. 2A is a flowchart illustrating a wireless communication method according to an embodiment of the present application. As shown in FIG. 2A, the wireless communication method is performed by a user equipment (UE) and comprises at least the following operation: Operation 201: transmitting, via a first message to at least one network node, first prediction measurement information predicted by the UE based on an artificial intelligence/machine learning (AI/ML) model, wherein the first prediction measurement information comprises mobility information of the UE at a future time, and wherein the mobility information of the UE at the future time comprises at least one of: AI/ML model identification information, handover node identification information, handover node access resource information, handover node access resource validity information, handover node access resource prediction accuracy information, a predicted measurement result, a predicted additional measurement result, a predicted neighboring-cell handover beam, a predicted measurement result time, and/or accuracy information.

FIG. 2B is a flowchart illustrating a wireless communication method according to an embodiment of the present application. As shown in FIG. 2B, the wireless communication method is performed by at least one network node and comprises at least the following operation: Operation 202: receiving, via a first message from a user equipment (UE), first prediction measurement information predicted by the UE based on an artificial intelligence/machine learning (AI/ML) model, wherein the first prediction measurement information comprises mobility information of the UE at a future time, and wherein the mobility information of the UE at the future time comprises at least one of: AI/ML model identification information, handover node identification information, handover node access resource information, handover node access resource validity information, handover node access resource prediction accuracy information, a predicted measurement result, a predicted additional measurement result, a predicted neighboring-cell handover beam, a predicted measurement result time, and/or accuracy information.

Specifically, the UE may correspond to the UE 120 illustrated in FIG. 1. The at least one network node may correspond to the base station 110 and/or the network 130 (e.g., a first network node) illustrated in FIG. 1. The base station 110 may be, for example, a gNB. By way of example, in some embodiments of the present disclosure, the UE transmits, to at least one network node, first prediction measurement information predicted by the UE based on an Artificial Intelligence/Machine Learning (AI/ML) model. The first prediction measurement information is used to represent information associated with a target handover node during a future period of time. Accordingly, an AI/ML algorithm may be utilized to predict a movement trajectory of the UE 120, thereby enabling more efficient wireless resource allocation and mobility management for the UE 120. The disclosed embodiments may further address shortcomings of conventional technologies. For example, conventional Radio Resource Management (RRM) measurement reporting mechanisms do not support reporting measurement results corresponding to future times. A UE may predict possible RRM measurement results at a future time based on historical information, which may result in misleading information. In addition, conventional handover procedures may suffer from handover latency.

In some embodiments of the present disclosure, the first message comprises Radio Resource Management (RRM) signaling, Radio Resource Control (RRC) signaling, or UE assistance information.

More specifically, in some embodiments, the UE may transmit the first prediction measurement information predicted based on the AI/ML model to the at least one network node via RRM signaling. In some embodiments, the UE may transmit the first prediction measurement information predicted based on the AI/ML model via RRC signaling. In some embodiments, the UE may transmit the first prediction measurement information predicted based on the AI/ML model via UE assistance information. The RRC signaling may comprise, for example, a dedicated RRC prediction-RRM reporting message.

In some embodiments of the present disclosure, the AI/ML model identification information is used to indicate the AI/ML model utilized by the UE. The AI/ML model identification information may comprise at least one of: a model identifier (ID), a functional ID, a feature ID, and/or an RRC configuration ID.

In some embodiments of the present disclosure, the handover node identification information is used to indicate identification information of a handover node. The handover node identification information may comprise at least one of: an area ID, a cell ID, a transmission and reception point (TRP) ID, and/or a tracking area (TA).

In some embodiments of the present disclosure, the handover node access resource information is used to indicate resource information of a handover node for handover or access during a future period of time. The handover node access resource information may comprise at least one of: a reference-signal periodicity, a time interval, a frequency-domain position, density information, a transmission duration, and/or a transmission power. More specifically, in some embodiments, the resources may comprise at least one of a beam, spectrum, or bandwidth. In addition, the resource information may further comprise requirements associated with pilot-signal configuration information to be used for data transmission and/or measurement after handover. The manner in which the future period of time is represented may refer to, but is not limited to, the handover node access resource validity information described herein. In some embodiments, the resource information included in the handover node access resource information may further comprise requirements associated with pilot-signal configuration information used for post-handover data transmission and/or measurement. Such information may comprise at least one of: a reference-signal periodicity, a time interval, a frequency-domain position, density information, a transmission duration, and/or a transmission power. The information may be used to guide a pilot-signal transmission strategy at a target handover node, thereby enabling the target node to better serve the UE during data transmission and/or handover procedures, reducing the probability of handover failure, and/or providing enhanced data transmission capability after handover completion.

In some embodiments of the present disclosure, the handover node access resource validity information is used to indicate access resources corresponding to a handover node, or a validity time or validity area associated with the handover node. More specifically, in some embodiments, the validity information may comprise a time-related description, including one or more of a start time, an end time, and a duration. In addition, the validity information may be represented by a coverage area, such as a tracking area (TA), a UE trajectory range, or any other suitable representation.

In some embodiments of the present disclosure, the handover node access resource validity information comprises a first implementation mode or a second implementation mode. In the first implementation mode, each access resource corresponds to one piece of access resource validity information indicating an effective time of the corresponding access resource. In the second implementation mode, an order of access resources is used to indicate a sequence of effective times associated with the access resources and corresponding time intervals. More specifically, in some embodiments, to further reduce signaling overhead while taking into account that measurement resources (e.g., CSI-RS or SSB) may be transmitted periodically, two implementation modes may be used for representing handover node access resource validity information.

First Implementation Mode: Direct Representation: In this mode, each access resource corresponds to one piece of access resource validity information indicating an effective time associated with the access resource. For example: {(Beam 1, Time 1), (Beam 2, Time 2)} indicates that Beam 1 is valid at Time 1 and Beam 2 is valid at Time 2.

Second Implementation Mode: Sequential Representation: In this mode, an order of access resources indicates a sequence of effective times and corresponding time intervals. For example: {Beam 1, Beam 2, Beam 3} indicates that Beam 1 is valid at time T0, Beam 2 is valid at time T0+ΔT, and Beam 3 is valid at time T0+2ΔT. The value ΔT may be predefined or may be configured by a base station for the UE.

In some embodiments of the present disclosure, the handover node access resource prediction accuracy information is used to indicate a prediction accuracy associated with access resources corresponding to a handover node and/or with the handover node itself.

In some embodiments of the present disclosure, the handover node access resource prediction accuracy information comprises a first mode, a second mode, or a third mode. In the first mode, all handover node access resources share one prediction accuracy. In the second mode, each handover node access resource corresponds to an individual prediction accuracy. In the third mode, one or more of the handover node access resources share one prediction accuracy. More specifically, in some embodiments, the handover node access resource prediction accuracy information may be represented according to the foregoing three modes. Under the first mode, all handover node access resources share a common prediction accuracy corresponding to the entire set of handover node access resources. Under the second mode, each handover node access resource is associated with a separate prediction accuracy. Under the third mode, one or more handover node access resources share a common prediction accuracy. The three prediction-accuracy modes may significantly reduce signaling overhead while providing flexibility for AI/ML implementations at the UE side. For example, handover node access resources may be generated by a single AI/ML model or by multiple AI/ML models.

In some embodiments, the foregoing information representations may be illustrated by the following examples: {AI Model #1, Cell #1, Beam #1, Time Window #1, 90%} indicates that, when AI Model #1 is used, the prediction accuracy associated with Beam #1 of Cell #1 during Time Window #1 is 90%. {AI Model #1, Cell #1, Time Window #1, 90%} indicates that, when AI Model #1 is used, the prediction accuracy associated with Cell #1 during Time Window #1 is 90%. Additional examples are omitted for brevity.

In some embodiments of the present disclosure, the UE identification information is used to identify a UE to which corresponding information belongs. In some embodiments, the UE identification information may comprise a globally unique user identifier or Radio Network Temporary Identifier (RNTI) information.

In some embodiments of the present disclosure, the predicted measurement result comprises a measurement result predicted by the UE based on an AI/ML model.

In some embodiments of the present disclosure, the predicted additional measurement result comprises a beam measurement result generated by the UE when beam measurement is not configured for a serving cell. More specifically, in some embodiments, a serving cell (e.g., Serving Cell #1) may not be configured to measure Beam #2. In such a case, the UE may autonomously include the measurement result of Beam #2 in the first prediction measurement information and report the information to the at least one network node. The UE may further predict that Beam #2 will be used as a handover beam and report the corresponding information to Serving Cell #1.

In some embodiments of the present disclosure, the predicted neighboring-cell handover beam comprises a beam expected to be used after handover to a neighboring cell. In some embodiments of the present disclosure, the predicted measurement result time comprises a time range associated with an expected measurement result. The predicted measurement result time may be an absolute time or a relative time. In some embodiments of the present disclosure, the predicted measurement result time may comprise at least one of: a start time of a predicted measurement-result time range, an end time of the predicted measurement-result time range, and/or a valid time window.

More specifically, in some embodiments, the predicted measurement result time may comprise a start time associated with a time range of an expected measurement result. The time may be represented as an absolute time or as a relative time offset (e.g., ΔT) relative to a current time. The predicted measurement result time may further comprise an end time associated with the time range of the expected measurement result. The predicted measurement result time may further comprise a valid time window associated with the expected measurement result.

In some embodiments of the present disclosure, the prediction accuracy associated with the predicted measurement result may comprise a measurement error range of a Reference Signal Received Power (RSRP) corresponding to the expected measurement result and/or a measurement error range associated with a predicted time of the expected measurement result. More specifically, in some embodiments, the prediction accuracy associated with the predicted measurement result may comprise an RSRP error of 10%, 20%, or any other suitable value. Alternatively or additionally, the prediction accuracy may comprise a time error of 1 second, 2 seconds, or any other suitable duration.

In some embodiments of the present disclosure, the UE may assist the at least one network node in performing configuration through UE assistance information. More specifically, in some embodiments, the UE may assist the at least one network node in configuring measurement reporting through UE assistance information and/or prediction-measurement configuration assistance information. For example, the UE may assist the at least one network node in selecting preferred measurement configurations, including determining which neighboring cells and which Synchronization Signal Blocks (SSBs) of the neighboring cells should be measured. Accordingly, predicted neighboring-cell handover beam information may be reported through UE assistance information rather than through the first prediction measurement information.

An example information element (IE) for UE assistance information used to assist the at least one network node in configuring measurement reporting may be represented as follows:

```
       UEAssistanceInformation-v1910-IEs ::= SEQUENCE {
       preferredMeasConfig,
       preferredPredictedMeasConfig
       }
```

Embodiment: gNB Configures Conditions for Reporting Predicted RRM Measurement Reports.

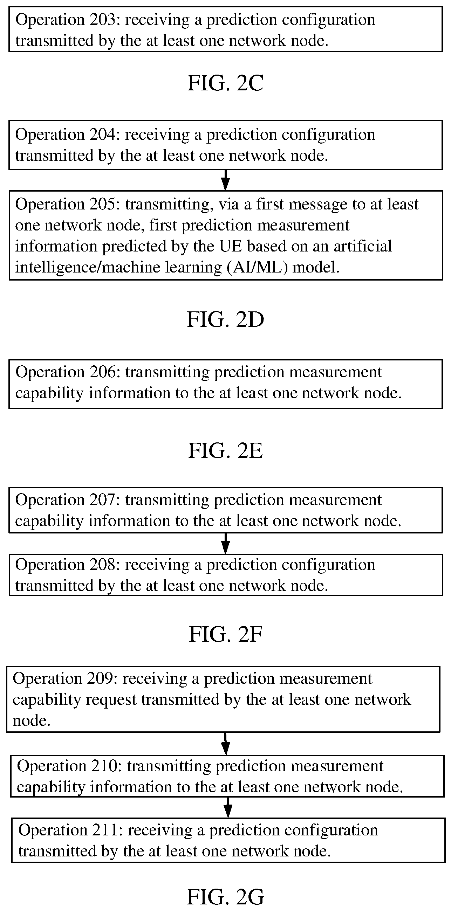

FIG. 2C is a flowchart illustrating a wireless communication method according to an embodiment of the present application. As shown in FIG. 2C, the wireless communication method is performed by a user equipment (UE) and comprises at least the following operation: Operation 203: receiving a prediction configuration transmitted by the at least one network node.

FIG. 2D is a flowchart illustrating a wireless communication method according to an embodiment of the present application. As shown in FIG. 2D, the wireless communication method is performed by a user equipment (UE) and comprises at least the following operations: Operation 204: receiving a prediction configuration transmitted by the at least one network node. Operation 205: transmitting, via a first message to at least one network node, first prediction measurement information predicted by the UE based on an artificial intelligence/machine learning (AI/ML) model, wherein the first prediction measurement information comprises mobility information of the UE at a future time, and wherein the first prediction measurement information comprises at least one of: UE identification information, a predicted measurement result, a predicted additional measurement result, a predicted neighboring-cell handover beam, a predicted measurement result time, and/or prediction accuracy information associated with the predicted measurement result.

More specifically, the UE may correspond to the UE 120 illustrated in FIG. 1. The at least one network node may correspond to the base station 110 and/or the network 130 (e.g., a first network node) illustrated in FIG. 1. The base station 110 may be, for example, a gNB.

By way of example, in some embodiments of the present disclosure, the UE transmits, to at least one network node, first prediction measurement information predicted by the UE based on an Artificial Intelligence/Machine Learning (AI/ML) model. The first prediction measurement information is used to represent information associated with a target handover node during a future period of time. Accordingly, an AI/ML algorithm may be utilized to predict a movement trajectory of the UE 120, thereby enabling more efficient wireless resource allocation and mobility management for the UE 120. The disclosed embodiments may further address shortcomings of conventional technologies. For example, conventional Radio Resource Management (RRM) measurement reporting mechanisms do not support reporting measurement results corresponding to future times. A UE may predict possible RRM measurement results at a future time based on historical information, which may result in misleading information. In addition, conventional handover procedures may suffer from handover latency.

In some embodiments of the present disclosure, before transmitting the first prediction measurement information predicted by the UE based on the AI/ML model via the first message to the at least one network node, the method further comprises: receiving a prediction configuration transmitted by the at least one network node.

In some embodiments of the present disclosure, the prediction configuration comprises a triggering condition. The triggering condition is used to trigger transmission of the first prediction measurement information from the UE to the at least one network node. The triggering condition may comprise at least one of: a prediction measurement event; a prediction measurement time; a prediction measurement lead time; and/or a current measurement result. In some embodiments of the present disclosure, when the prediction configuration is configured at a beam level, the first prediction measurement information is also configured at the beam level.

More specifically, in some embodiments of the present disclosure, to support mobility-related handover measurements at the UE side, a base station may configure RRM measurement-reporting events for the UE so as to minimize UE reporting overhead while maintaining measurement timeliness. With the introduction of AI/ML-based predicted RRM measurement reporting, configuration information for predicted RRM measurements may comprise one or more of the following items:
- Predicted Measurement Event: A measurement event definition based on predicted measurements and used to indicate that, when the UE determines that the predicted measurement event is satisfied, a corresponding measurement reporting procedure is performed. Detailed implementations are described below.
- Predicted Measurement Time: Used to indicate a duration during which the predicted measurement event is expected to remain satisfied before the corresponding predicted measurement result is reported. The time may be represented in one or more forms, including a start time, an end time, a minimum measurement time window, a maximum measurement time window, a measurement duration window, or the like.
- Predicted Measurement Lead Time: Used to indicate how far in advance a predicted measurement report should be transmitted after a predicted measurement event is detected. The lead time may be represented in various forms, such as an absolute time or a relative time.
- Current Measurement Result as a Trigger for Predicted RRM Measurement: A current measurement result may indicate a current location of the UE. For example, the UE may have moved close to a cell edge. Accordingly, the current measurement result may be used as a trigger condition for initiating predicted RRM measurements.

In some embodiments of the present disclosure, the predicted measurement configuration may be configured at a cell level or at a beam level. When the measurement configuration is configured at the beam level, the predicted measurement report is also configured at the beam level (e.g., SSB index level).

To further illustrate the foregoing method, several examples are provided below. However, these examples are not intended to limit other implementations of the disclosed techniques. For example, a gNB may configure a predicted measurement configuration comprising: (Predicted Measurement Event A3, Start Time = 10 s, End Time = 20 s). In this case, the UE reports a predicted measurement event when the UE predicts that the A3 measurement event will be satisfied during the period from 10 seconds to 20 seconds. As another example, a gNB may configure a predicted measurement configuration comprising: (Predicted Measurement Event A3, Measurement Lead Time = 10 s). In this case, the UE reports the predicted measurement event 10 seconds before the UE predicts that the A3 measurement event will be satisfied.

Embodiment: UE Capability Reporting.

FIG. 2E is a flowchart illustrating a wireless communication method according to an embodiment of the present application. As shown in FIG. 2E, the wireless communication method is performed by a user equipment (UE) and comprises at least the following operation: Operation 206: transmitting prediction measurement capability information to the at least one network node, wherein the prediction measurement capability information comprises at least one of: handover failure prediction support, radio link failure prediction support, cell-level RRM prediction support, beam-level RRM prediction support, cell-level handover prediction support, and/or beam-level handover prediction support.

FIG. 2F is a flowchart illustrating a wireless communication method according to an embodiment of the present application. As shown in FIG. 2F, the wireless communication method is performed by a user equipment (UE) and comprises at least the following operations: Operation 207: transmitting prediction measurement capability information to the at least one network node, wherein the prediction measurement capability information comprises at least one of: handover failure prediction support, radio link failure prediction support, cell-level RRM prediction support, beam-level RRM prediction support, cell-level handover prediction support, and/or beam-level handover prediction support. Operation 208: receiving a prediction configuration transmitted by the at least one network node.

FIG. 2G is a flowchart illustrating a wireless communication method according to an embodiment of the present application. As shown in FIG. 2G, the wireless communication method is performed by a user equipment (UE) and comprises at least the following operations: Operation 209: receiving a prediction measurement capability request transmitted by the at least one network node. Operation 210: transmitting prediction measurement capability information to the at least one network node, wherein the prediction measurement capability information comprises at least one of: handover failure prediction support, radio link failure prediction support, cell-level RRM prediction support, beam-level RRM prediction support, cell-level handover prediction support, and/or beam-level handover prediction support. Operation 211: receiving a prediction configuration transmitted by the at least one network node.

More specifically, the UE may correspond to the UE 120 illustrated in FIG. 1. The at least one network node may correspond to the base station 110 and/or the network 130 (e.g., a first network node) illustrated in FIG. 1. The base station 110 may be, for example, a gNB. By way of example, in some embodiments of the present disclosure, the UE transmits prediction measurement capability information to the at least one network node. Accordingly, an AI/ML algorithm may be utilized to predict a movement trajectory of the UE 120, thereby enabling more efficient wireless resource allocation and mobility management for the UE 120. The disclosed embodiments may further address shortcomings of conventional technologies. For example, conventional Radio Resource Management (RRM) measurement reporting mechanisms do not support reporting measurement results corresponding to future times. A UE may predict possible RRM measurement results at a future time based on historical information, which may result in misleading information. In addition, conventional handover procedures may suffer from handover latency.

In some embodiments of the present disclosure, before receiving the prediction configuration transmitted by the at least one network node, the method further comprises: transmitting prediction measurement capability information to the at least one network node, wherein the prediction measurement capability information comprises at least one of: handover failure prediction support, radio link failure prediction support, cell-level RRM prediction support, beam-level RRM prediction support, cell-level handover prediction support, and/or beam-level handover prediction support.

In some embodiments of the present disclosure, before transmitting the prediction measurement capability information to the at least one network node, the method further comprises: receiving a prediction measurement capability request transmitted by the at least one network node. In some embodiments, the prediction measurement capability request is used to request the UE to report prediction-related RRM capabilities.

In some embodiments of the present disclosure, the handover failure prediction support indicates a capability of the UE to support handover failure prediction, including whether the UE supports predicting when a handover failure will occur. The handover failure prediction support may comprise node information and/or resource information and/or AI/ML model information. In some embodiments of the present disclosure, the radio link failure prediction support indicates a capability of the UE to support radio link failure prediction, including whether the UE supports predicting when a radio link failure will occur. The radio link failure prediction support may comprise node information and/or resource information and/or AI/ML model information. In some embodiments of the present disclosure, the cell-level RRM prediction support indicates a capability of the UE to support RRM prediction, including whether the UE supports predicting cell-level RRM. The cell-level RRM prediction support may comprise node information and/or resource information and/or AI/ML model information.

In some embodiments of the present disclosure, the beam-level radio resource management (RRM) prediction support indicates a capability of the UE to support beam-level RRM prediction, including whether the UE supports predicting beam-level RRM. The beam-level RRM prediction support may comprise node information and/or resource information and/or AI/ML model information. In some embodiments of the present disclosure, the cell-level handover prediction support indicates a capability of the UE to support cell-level handover prediction, including whether the UE supports predicting cell-level handovers. The cell-level handover prediction support may comprise node information and/or resource information and/or AI/ML model information. In some embodiments of the present disclosure, the beam-level handover prediction support indicates a capability of the UE to support beam-level handover prediction, including whether the UE supports predicting beam-level handovers. The beam-level handover prediction support may comprise node information and/or resource information and/or AI/ML model information.

In some embodiments of the present disclosure, the node information is used to indicate that a corresponding prediction capability is supported for a particular node, and the resource information is used to indicate that the corresponding prediction capability is supported for a particular resource. The node information may comprise a cell ID, a transmission and reception point (TRP) ID, a tracking area (TA), a scenario ID, and/or an area ID. The resource information may comprise beam information, bandwidth information, and/or frequency-point information.

More specifically, in some embodiments, AI/ML prediction functions may require computational resources at the UE side. In a communication network, some UEs may support AI/ML-based predicted RRM measurements, whereas other UEs may not support predicted RRM measurements. In addition, different UEs may support significantly different levels of predicted RRM measurement capabilities. Accordingly, in order to support predicted RRM measurements, a gNB may determine whether a UE supports predicted RRM measurement capabilities so that the gNB can provide appropriate configurations to the UE.

In some embodiments of the present disclosure, prediction-based RRM measurement capability information reported by the UE to a gNB and/or a network-side entity (e.g., a gNB, a core-network entity, a third-party entity, or the like) may comprise one or more of the following items:
- Handover Failure Prediction Support: This information describes a capability of the UE to support handover failure prediction, including whether the UE supports predicting when a handover failure will occur. The information may further comprise node information and/or resource information and/or AI/ML model information. The node information may indicate that the prediction capability is supported only for particular nodes, and the resource information may indicate that the prediction capability is supported only for particular resources. Examples of node information include a cell ID, a transmission and reception point (TRP) ID, a tracking area (TA), a scenario ID, and/or an area ID. Examples of resource information include beam information, bandwidth information, and/or frequency-point information.
- Radio Link Failure (RLF) Prediction Support: This information describes a capability of the UE to support radio link failure (RLF) prediction, including whether the UE supports predicting when an RLF event will occur. The information may further comprise node information and/or resource information and/or AI/ML model information. The node information may indicate that the prediction capability is supported only for particular nodes, and the resource information may indicate that the prediction capability is supported only for particular resources. Examples of node information include a cell ID, a TRP ID, a TA, a scenario ID, and/or an area ID. Examples of resource information include beam information, bandwidth information, and/or frequency-point information.
- Cell-Level RRM Prediction Support: This information describes a capability of the UE to support cell-level RRM prediction, including whether the UE supports predicting cell-level RRM. The information may further comprise node information and/or resource information and/or AI/ML model information. The node information may indicate that the prediction capability is supported only for particular nodes, and the resource information may indicate that the prediction capability is supported only for particular resources. Examples of node information include a cell ID, a TRP ID, a TA, a scenario ID, and/or an area ID. Examples of resource information include beam information, bandwidth information, and/or frequency-point information.
- Beam-Level RRM Prediction Support: This information describes a capability of the UE to support beam-level RRM prediction, including whether the UE supports predicting beam-level RRM. The information may further comprise node information and/or resource information and/or AI/ML model information. The node information may indicate that the prediction capability is supported only for particular nodes, and the resource information may indicate that the prediction capability is supported only for particular resources. Examples of node information include a cell ID, a TRP ID, a TA, a scenario ID, and/or an area ID. Examples of resource information include beam information, bandwidth information, and/or frequency-point information.
- Cell-Level Handover Prediction Support: This information describes a capability of the UE to support cell-level handover prediction, including whether the UE supports predicting cell-level handovers. The information may further comprise node information and/or resource information and/or AI/ML model information. The node information may indicate that the prediction capability is supported only for particular nodes, and the resource information may indicate that the prediction capability is supported only for particular resources. Examples of node information include a cell ID, a TRP ID, a TA, a scenario ID, and/or an area ID. In some implementations, an area ID may indicate that a corresponding AI/ML model is valid only within a particular geographic area. Examples of resource information include beam information, bandwidth information, and/or frequency-point information.
- Beam-Level Handover Prediction Support: This information describes a capability of the UE to support beam-level handover prediction, including whether the UE supports predicting beam-level handovers. In some implementations, this capability may be represented as a generic UE capability without including any additional parameters. The information may further comprise node information and/or resource information and/or AI/ML model information. The node information may indicate that the prediction capability is supported only for particular nodes, and the resource information may indicate that the prediction capability is supported only for particular resources. Examples of node information include a cell ID, a transmission and reception point (TRP) ID, a tracking area (TA), a scenario ID, and/or an area ID. Examples of resource information include beam information, bandwidth information, and/or frequency-point information.

Note 1: Any of the foregoing prediction capabilities may further comprise prediction-time capability information, including a capability to indicate a start time and an end time of a time range during which a predicted event is expected to occur.

Note 2: Any of the foregoing prediction capabilities may further comprise accuracy information, indicating a probability that a predicted event will occur, such as 10%, 20%, 30%, or other probability values.

Note 3: When both an area ID and a cell ID are included in a capability indication, the capability may indicate that the corresponding prediction capability is valid for a particular area identified by the area ID and/or for a particular cell identified by the cell ID.

Embodiment: Triggered Reporting of Predicted RRM Measurement Capability.

A gNB may transmit an RRM (mobility) prediction capability request message to a UE to request the UE to report RRM (mobility) prediction capabilities. Upon receiving the RRM (mobility) prediction capability request, the UE may transmit an RRM (mobility) prediction capability report to the gNB. The RRM (mobility) prediction capability report may comprise at least one of: handover failure prediction support; radio link failure (RLF) prediction support; cell-level RRM prediction support; beam-level RRM prediction support; cell-level handover prediction support; and/or beam-level handover prediction support.

Embodiment: Reporting Through a UE Capability Report.

The UE may include an RRM (mobility) prediction capability report in a UE capability report. The RRM (mobility) prediction capability report may comprise at least one of: handover failure prediction support; radio link failure (RLF) prediction support; cell-level RRM prediction support; beam-level RRM prediction support; cell-level handover prediction support; and/or beam-level handover prediction support. Specific message formats are not limited herein.

An example Information Element (IE) for an RRM (mobility) prediction capability report is shown below:

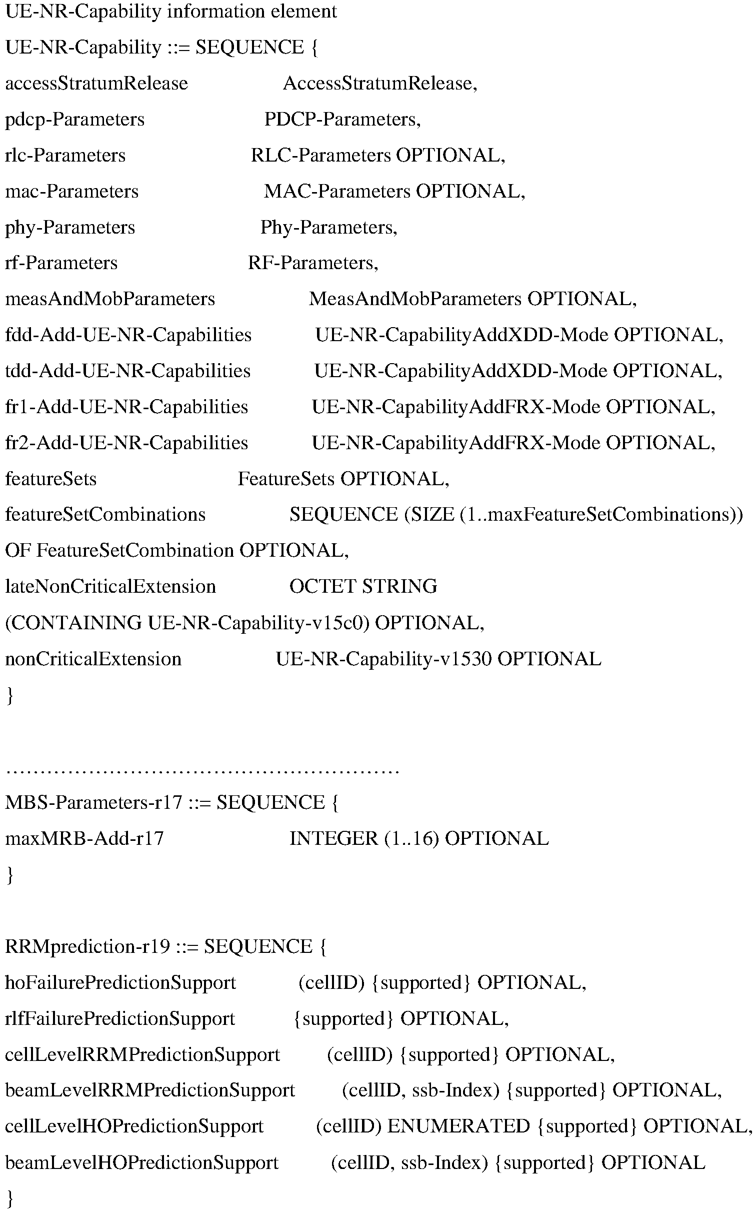

In some embodiments, a network request message transmitted to the UE may further comprise a cell ID and/or an SSB index to inquire whether the UE supports prediction capabilities for a particular cell and/or beam. For example, the network may request information regarding support for handover-failure prediction, RRM prediction, or other prediction capabilities associated with the specified cell and/or beam.

Second Embodiment: UE Trajectory Prediction Information Predicted by at Least One Network Node Based on an AI/ML Model.

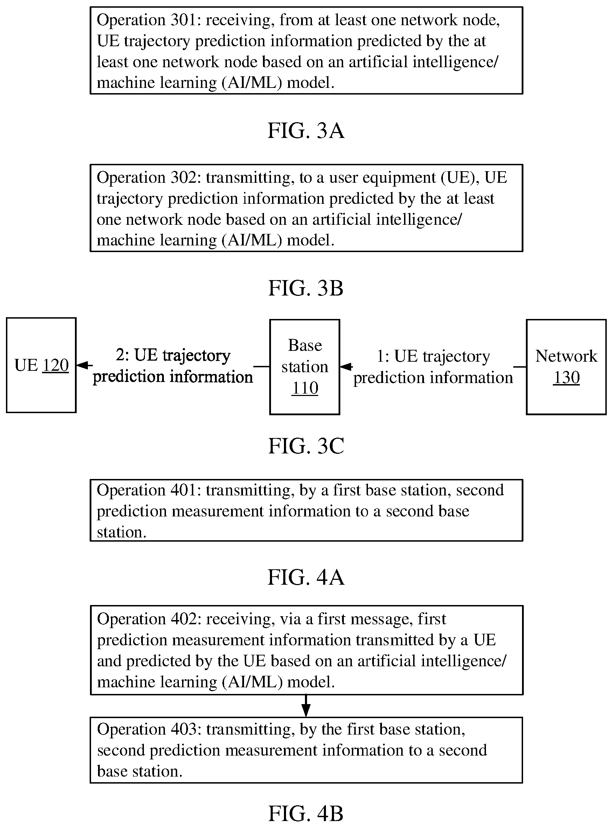

FIG. 3A is a flowchart illustrating a wireless communication method according to an embodiment of the present application. As shown in FIG. 3A, the wireless communication method is performed by a user equipment (UE) and comprises at least the following operation: Operation 301: receiving, from at least one network node, UE trajectory prediction information predicted by the at least one network node based on an artificial intelligence/machine learning (AI/ML) model, wherein the UE trajectory prediction information comprises at least one of: UE identification information, a predicted UE radio resource management (RRM) measurement result, a predicted measurement result time, prediction accuracy information, node information, node access resource information, node access resource validity information, and/or node access resource prediction accuracy information.

FIG. 3B is a flowchart illustrating a wireless communication method according to an embodiment of the present application. As shown in FIG. 3B, the wireless communication method is performed by at least one network node and comprises at least the following operation: Operation 302: transmitting, to a user equipment (UE), UE trajectory prediction information predicted by the at least one network node based on an artificial intelligence/machine learning (AI/ML) model, wherein the UE trajectory prediction information comprises at least one of: UE identification information, a predicted UE radio resource management (RRM) measurement result, a predicted measurement result time, prediction accuracy information, node information, node access resource information, node access resource validity information, and/or node access resource prediction accuracy information.

More specifically, the UE may correspond to the UE 120 illustrated in FIG. 1. The at least one network node may correspond to the base station 110 and/or the network 130 (e.g., a first network node) illustrated in FIG. 1. The base station 110 may be, for example, a gNB. By way of example, in some embodiments of the present disclosure, the UE 120 receives UE trajectory prediction information transmitted by the at least one network node and predicted by the at least one network node based on an artificial intelligence/machine learning (AI/ML) model. Accordingly, an AI/ML algorithm may be utilized to predict a movement trajectory of the UE 120, thereby enabling more efficient wireless resource allocation and mobility management for the UE 120. The disclosed embodiments may further address shortcomings of conventional technologies. For example, conventional Radio Resource Management (RRM) measurement reporting mechanisms do not support reporting measurement results corresponding to future times. A UE may predict possible RRM measurement results at a future time based on historical information, which may result in misleading information. In addition, conventional handover procedures may suffer from handover latency.

In some embodiments of the present disclosure, the UE identification information is used to identify a UE associated with corresponding information. In some embodiments, the UE identification information may comprise a globally unique user identifier or Radio Network Temporary Identifier (RNTI) information. In some embodiments, the predicted UE RRM measurement result corresponds to an RRM measurement result that would otherwise be reported by the UE.

In some embodiments of the present disclosure, the predicted UE RRM measurement result time comprises a time range associated with an expected measurement result. The predicted measurement result time may be represented as an absolute time or a relative time. In some embodiments, the predicted measurement result time may comprise at least one of: a start time of a predicted measurement-result time range, an end time of the predicted measurement-result time range, and/or a valid time window.

More specifically, the predicted measurement result time may comprise a start time associated with a time range of an expected measurement result. The time may be represented as an absolute time or as a relative time offset (e.g., ΔT) relative to a current time. The predicted measurement result time may further comprise an end time associated with the time range of the expected measurement result. The predicted measurement result time may further comprise a valid time window associated with the expected measurement result.

In some embodiments of the present disclosure, the prediction accuracy information may comprise at least one of: a measurement error range of a Reference Signal Received Power (RSRP) associated with the expected measurement result and/or a measurement error range associated with a predicted time of the expected measurement result. More specifically, the prediction accuracy information may indicate an RSRP prediction error of 10%, 20%, or another suitable value. Alternatively or additionally, the prediction accuracy information may indicate a time prediction error of 1 second, 2 seconds, or another suitable duration.

In some embodiments of the present disclosure, the node information is used to indicate identification information of a handover node. The node information may comprise at least one of: an area ID, a cell ID, a transmission and reception point (TRP) ID, and/or a tracking area (TA). In some embodiments of the present disclosure, the node access resource information is used to indicate resources of a handover node for handover or access during a future period of time. The node access resource information may comprise at least one of: a beam, spectrum, and/or bandwidth.

In some embodiments of the present disclosure, the node access resource validity information is used to indicate access resources corresponding to a handover node, or a validity time or validity area associated with the handover node. More specifically, in some embodiments, the validity information may comprise a time-related description, including one or more of a start time, an end time, and a duration. Additionally, the validity information may be represented by a coverage area, such as a tracking area (TA), a UE trajectory range, or any other suitable representation.

In some embodiments of the present disclosure, the node access resource validity information comprises a first implementation mode or a second implementation mode. In the first implementation mode, each access resource corresponds to one piece of access resource validity information indicating an effective time associated with the corresponding access resource. In the second implementation mode, an order of access resources indicates a sequence of effective times associated with the access resources and corresponding time intervals.

More specifically, in some embodiments of the present disclosure, in order to further reduce signaling overhead while taking into account that measurement resources (e.g., CSI-RS, SSB, or the like) are transmitted periodically, the node access resource validity information may be represented using two implementation modes, as described below.

First Implementation Mode: Direct Representation: In this implementation mode, each access resource corresponds to one piece of access resource validity information indicating an effective time associated with the access resource. For example: {(Beam 1, Time 1), (Beam 2, Time 2)} indicates that Beam 1 is valid at Time 1 and Beam 2 is valid at Time 2.

Second Implementation Mode: Sequential Representation: In this implementation mode, an order of access resources indicates a sequence of effective times associated with the access resources and corresponding time intervals. For example: {Beam 1, Beam 2, Beam 3} indicates that Beam 1 is valid at time T0, Beam 2 is valid at time T0+ΔT, and Beam 3 is valid at time T0+2ΔT. The value ΔT may be predefined or may be configured by a base station for the UE.

In some embodiments of the present disclosure, the node access resource prediction accuracy information is used to indicate a prediction accuracy associated with access resources corresponding to a handover node and/or associated with the handover node itself. In some embodiments of the present disclosure, the node access resource prediction accuracy information may comprise a first mode, a second mode, or a third mode. In the first mode, all handover-node access resources share one prediction accuracy. In the second mode, each handover-node access resource corresponds to an individual prediction accuracy. In the third mode, one or more of the handover-node access resources share one prediction accuracy. In some embodiments of the present disclosure, the UE may assist the at least one network node in performing configuration through UE assistance information.

More specifically, the node access resource prediction accuracy information may be represented using three different modes. Under the first mode, all handover-node access resources share a common prediction accuracy corresponding to the entire set of handover-node access resources. Under the second mode, each handover-node access resource is associated with a separate prediction accuracy. Under the third mode, one or more handover-node access resources share a common prediction accuracy. The three prediction-accuracy modes may significantly reduce signaling overhead while providing flexibility for AI/ML implementations at the UE side. For example, handover-node access resources may be generated by a single AI/ML model or by multiple AI/ML models.

Examples of the foregoing information representations are provided below. For example: {AI Model #1, Cell #1, Beam #1, Time Window #1, 90%} indicates that, when AI Model #1 is used, the prediction accuracy associated with Beam #1 of Cell #1 during Time Window #1 is 90%. As another example: {AI Model #1, Cell #1, Time Window #1, 90%} indicates that, when AI Model #1 is used, the prediction accuracy associated with Cell #1 during Time Window #1 is 90%. Additional examples are omitted for brevity.

More specifically, in some embodiments, the UE may assist the at least one network node in configuring measurement reporting through UE assistance information and/or prediction-measurement configuration assistance information. For example, the UE may assist the at least one network node in selecting preferred measurement configurations, including determining which neighboring cells and which Synchronization Signal Blocks (SSBs) of the neighboring cells should be measured. Accordingly, predicted neighboring-cell handover beam information may be reported through UE assistance information rather than through the first prediction measurement information.

As illustrated in FIG. 3C, in some embodiments of the present disclosure, AI/ML-based mobility prediction is deployed at the network side. After a network-side AI/ML model completes mobility and handover prediction for a UE, prediction results are transmitted to the UE, and the UE performs mobility and/or handover procedures based on the received prediction results. Both the network and a gNB may predict measurement results associated with the UE.

As illustrated in FIG. 3C, the at least one network node may comprise a base station 110 and a first network node. The base station 110 may be, for example, a gNB, and the first network node may be, for example, the network 130. The method may further comprise: obtaining, by the base station 110, UE trajectory prediction information from the first network node. In some embodiments, the UE trajectory prediction information obtained by the base station 110 from the first network node may comprise at least one of: the UE identification information; the predicted UE RRM measurement result; the predicted measurement result time; and/or the prediction accuracy information.

More specifically, as illustrated in FIG. 3C, the base station 110 (e.g., a gNB) may obtain UE trajectory prediction information from the first network node (e.g., the network 130).
1. Message 1: gNB Obtains UE Trajectory Prediction Information from the Network.

The gNB may obtain UE trajectory prediction information from the network side. The network may comprise one or more of: an Access and Mobility Management Function (AMF); a Session Management Function (SMF); a User Plane Function (UPF); a Network Exposure Function (NEF); a Data Analytics Function (D-WDAF); a Multi-access Edge Computing (MEC) entity; a third-party entity; and/or other network entities. For example, when the gNB obtains UE trajectory prediction information from an AMF, the UE trajectory prediction information may be carried in an INITIAL CONTEXT SETUP REQUEST message. As another example, when the gNB obtains UE trajectory prediction information directly from a third-party entity, the UE trajectory prediction information may be carried using a User Datagram Protocol (UDP) protocol, a Transmission Control Protocol (TCP) protocol, or another suitable transport mechanism. Other implementations are omitted for brevity. The UE trajectory prediction information obtained by the gNB may comprise at least one of the following items:

UE Identification Information: This information is used to identify a UE associated with the prediction information. The identification information may comprise a globally unique user identifier or Radio Network Temporary Identifier (RNTI) information. No limitation is imposed in this regard.

Predicted UE RRM Measurement Result: This parameter may correspond to an RRM measurement result that would otherwise be reported by the UE.

Predicted Measurement Result Time: This parameter indicates a validity period associated with the prediction result and may correspond to the start time and end time described in the first embodiment.

### Prediction Accuracy Information.

The gNB may configure a current mobility and handover measurement procedure for the UE based on the obtained information. The implementation of the mobility and handover measurement procedure may be similar to a conventional RRM measurement configuration procedure and therefore is not described in further detail herein. For example, after obtaining a predicted UE trajectory, the gNB may configure one or more measurement objects for the UE and include predicted target-cell SSB indexes in the measurement objects transmitted to the UE.

As illustrated in FIG. 3C, in some embodiments of the present disclosure, the at least one network node comprises a base station 110 and a first network node. The base station 110 may be, for example, a gNB, and the first network node may be, for example, the network 130. The method may further comprise: after obtaining the UE trajectory prediction information from the first network node, transmitting, by the base station 110, the UE trajectory prediction information to the UE 120. In some embodiments, the UE trajectory prediction information transmitted by the base station 110 to the UE 120 may comprise at least one of: the node information; the node access resource information; the node access resource validity information; and/or the node access resource prediction accuracy information.

More specifically, as illustrated in FIG. 3C, after obtaining predicted UE RRM information from the first network node (e.g., the network 130), the base station 110 (e.g., a gNB) may transmit prediction results to the UE.

### 2. Message 2: gNB Transmits UE Prediction Results After Obtaining Predicted UE RRM Information from the Network

In this scheme, a network-side entity (including, for example, a base station, a core-network entity, a MEC entity, a third-party entity, or the like) obtains predicted UE RRM measurement information through an algorithm and/or an AI/ML model and configures an RRM measurement procedure for the UE based on the obtained prediction information. Information configured by the network side and transmitted to the UE may comprise at least one of the following items:
- Node Information: This information is used to indicate identification information associated with a handover node. The information may comprise one or more of: an area ID, a cell ID, a TRP ID, and/or a tracking area (TA).
- Node Access Resource Information: This information is used to indicate resources of a handover node that may be used for handover or access during a future period of time. The resources may comprise at least one of: beams, spectrum resources, and/or bandwidth resources.
- Node Access Resource Validity Information: This information is used to indicate a validity time and/or validity area associated with access resources corresponding to a handover node. The validity information may comprise one or more of a start time, an end time, and/or a duration. Additionally, the validity information may be represented by a coverage area, such as a tracking area (TA), a UE trajectory range, or another suitable representation.
- Node Access Resource Prediction Accuracy Information: This information is used to indicate prediction accuracy associated with access resources corresponding to a handover node. To further reduce signaling overhead while taking into account that measurement resources (e.g., CSI-RS, SSB, or the like) are transmitted periodically, the node access resource validity information may be represented using two implementation modes, as described below.
- Direct Representation: In this implementation mode, each access resource corresponds to one piece of access resource validity information indicating an effective time associated with the access resource. For example: {(Beam 1, Time 1), (Beam 2, Time 2)} indicates that Beam 1 is valid at Time 1 and Beam 2 is valid at Time 2.
- Sequential Representation: In this implementation mode, an order of access resources indicates a sequence of effective times associated with the access resources and corresponding time intervals. For example: {Beam 1, Beam 2, Beam 3} indicates that Beam 1 is valid at time T0, Beam 2 is valid at time T0+ΔT, and Beam 3 is valid at time T0+2ΔT. The value ΔT may be predefined or may be configured by the base station for the UE.

Third Embodiment: A First Base Station Transmits Second Prediction Measurement Information to a Second Base Station.

FIG. 4A is a flowchart illustrating a wireless communication method according to an embodiment of the present application. As shown in FIG. 4A, the wireless communication method is performed by at least one network node and comprises at least the following operation: Operation 401: transmitting, by a first base station, second prediction measurement information to a second base station, wherein the second prediction measurement information comprises mobility information of a UE at a future time, and wherein the mobility information of the UE at the future time comprises at least one of: AI/ML model identification information; handover-node identification information; handover-node access resource information; handover-node access resource validity information; handover-node access resource prediction accuracy information; a predicted measurement result; a predicted additional measurement result; a predicted neighboring-cell handover beam; a predicted measurement result time; and/or prediction accuracy information.

FIG. 4B is a flowchart illustrating a wireless communication method according to an embodiment of the present application. As shown in FIG. 4B, the wireless communication method is performed by at least one network node and comprises at least the following operations: Operation 402: receiving, via a first message, first prediction measurement information transmitted by a UE and predicted by the UE based on an artificial intelligence/machine learning (AI/ML) model, wherein the first prediction measurement information comprises mobility information of the UE at a future time, and wherein the mobility information of the UE at the future time comprises at least one of: AI/ML model identification information; handover-node identification information; handover-node access resource information; handover-node access resource validity information; handover-node access resource prediction accuracy information; a predicted measurement result; a predicted additional measurement result; a predicted neighboring-cell handover beam; a predicted measurement result time; and/or prediction accuracy information. Operation 403: transmitting, by the first base station, second prediction measurement information to a second base station, wherein the second prediction measurement information comprises mobility information of the UE at a future time, and wherein the mobility information of the UE at the future time comprises at least one of: AI/ML model identification information; handover-node identification information; handover-node access resource information; handover-node access resource validity information; handover-node access resource prediction accuracy information; a predicted measurement result; a predicted additional measurement result; a predicted neighboring-cell handover beam; a predicted measurement result time; and/or prediction accuracy information. More specifically, the embodiment illustrated in FIG. 4B may be implemented as an example based on the first embodiment described above. Accordingly, details already described with respect to the first embodiment are not repeated herein.

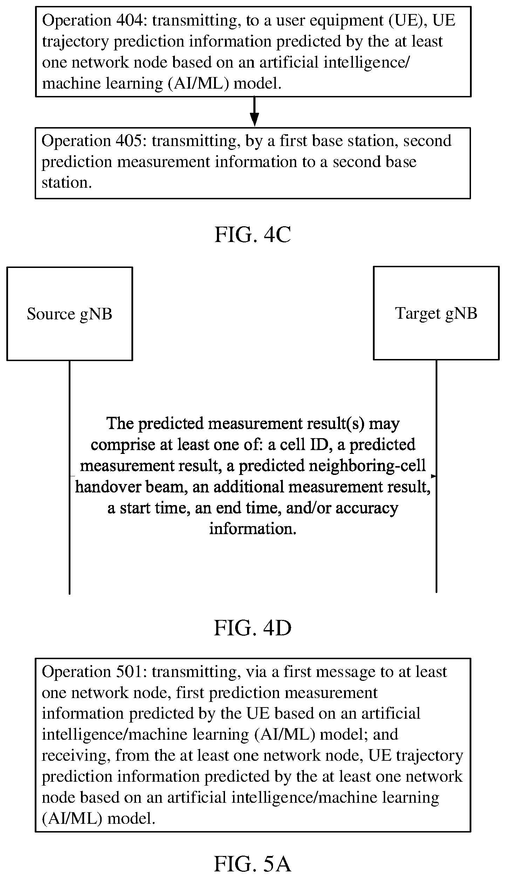

FIG. 4C is a flowchart illustrating a wireless communication method according to an embodiment of the present application. As shown in FIG. 4C, the wireless communication method is performed by at least one network node and comprises at least the following operations: Operation 404: transmitting, to a user equipment (UE), UE trajectory prediction information predicted by the at least one network node based on an artificial intelligence/machine learning (AI/ML) model, wherein the UE trajectory prediction information comprises at least one of: UE identification information; a predicted UE RRM measurement result; a predicted measurement result time; prediction accuracy information; node information; node access resource information; node access resource validity information; and/or node access resource prediction accuracy information. Operation 405: transmitting, by a first base station, second prediction measurement information to a second base station, wherein the second prediction measurement information comprises mobility information of a UE at a future time, and wherein the mobility information of the UE at the future time comprises at least one of: AI/ML model identification information; handover-node identification information; handover-node access resource information; handover-node access resource validity information; handover-node access resource prediction accuracy information; a predicted measurement result; a predicted additional measurement result; a predicted neighboring-cell handover beam; a predicted measurement result time; and/or prediction accuracy information. More specifically, the embodiment illustrated in FIG. 4C may be implemented as an example based on the second embodiment described above. Accordingly, details already described with respect to the second embodiment are not repeated herein.

In some embodiments of the present disclosure, the at least one network node further comprises a first network node. The method may further comprise: receiving, by the first base station, the second prediction measurement information transmitted by the UE, wherein the second prediction measurement information comprises prediction measurement information predicted by the UE based on an AI/ML model or prediction measurement information predicted by the first network node based on an AI/ML model.

In some embodiments of the present disclosure, the at least one network node further comprises a first network node. The method may further comprise: receiving, by the first base station, the second prediction measurement information transmitted by the first network node, wherein the second prediction measurement information comprises prediction measurement information predicted by the UE based on an AI/ML model or prediction measurement information predicted by the first network node based on an AI/ML model.

More specifically, the UE may correspond to the UE 120 illustrated in FIG. 1. The at least one network node may correspond to the base station 110 and/or the network 130 (e.g., a first network node) illustrated in FIG. 1. The base station 110 may comprise a first base station and a second base station. The first base station may be a source gNB, and the second base station may be a target gNB.

As illustrated in FIG. 4D, in some embodiments, the source gNB transmits prediction measurement results received from the UE to the target gNB, thereby enabling the target gNB to pre-allocate handover resources for the UE. The prediction measurement results may correspond to the prediction measurement results described in the first embodiment and therefore are not repeated herein. In some embodiments, the prediction measurement results may comprise at least one of: a cell ID; a predicted measurement result (e.g., a measurement object (measObject)); a predicted neighboring-cell handover beam; a predicted additional measurement result; a start time; an end time; and/or prediction accuracy information.

In some embodiments, the transmitted message may further distinguish whether the prediction information originates from the UE or from the network side. Accordingly, an additional parameter may be introduced: UE Prediction / Network Prediction Indication.

In some embodiments, the source gNB transmits the prediction measurement information to the target gNB. In some embodiments, the source base station receives the prediction measurement information transmitted by the UE together with a first indication. In some embodiments, the first indication comprises a UE Prediction Indication.

In some embodiments, the source gNB transmits UE trajectory prediction information to the target gNB. In some embodiments, the source base station receives the UE trajectory prediction information transmitted by the first network node together with a first indication. In some embodiments, the first indication comprises a Network Prediction Indication.

FIG. 5A is a flowchart illustrating a wireless communication method according to an embodiment of the present application. As shown in FIG. 5A, the wireless communication method is performed by a user equipment (UE) and comprises at least the following operation: Operation 501: transmitting, via a first message to at least one network node, first prediction measurement information predicted by the UE based on an artificial intelligence/machine learning (AI/ML) model; and receiving, from the at least one network node, UE trajectory prediction information predicted by the at least one network node based on an artificial intelligence/machine learning (AI/ML) model, wherein the first prediction measurement information comprises mobility information of the UE at a future time, and wherein the mobility information of the UE at the future time comprises at least one of: AI/ML model identification information; handover-node identification information; handover-node access resource information; handover-node access resource validity information; handover-node access resource prediction accuracy information; a predicted measurement result; a predicted additional measurement result; a predicted neighboring-cell handover beam; a predicted measurement result time; and/or prediction accuracy information, and wherein the UE trajectory prediction information comprises at least one of: UE identification information; a predicted UE RRM measurement result; a predicted measurement result time; prediction accuracy information; node information; node access resource information; node access resource validity information; and/or node access resource prediction accuracy information.

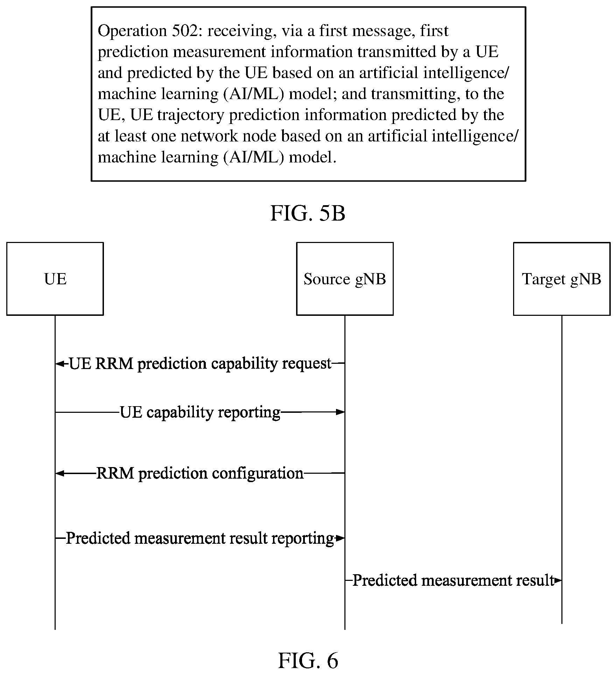

FIG. 5B is a flowchart illustrating a wireless communication method according to an embodiment of the present application. As shown in FIG. 5B, the wireless communication method is performed by at least one network node and comprises at least the following operation: Operation 502: receiving, via a first message, first prediction measurement information transmitted by a UE and predicted by the UE based on an artificial intelligence/machine learning (AI/ML) model; and transmitting, to the UE, UE trajectory prediction information predicted by the at least one network node based on an artificial intelligence/machine learning (AI/ML) model, wherein the first prediction measurement information comprises mobility information of the UE at a future time, and wherein the mobility information of the UE at the future time comprises at least one of: AI/ML model identification information; handover-node identification information; handover-node access resource information; handover-node access resource validity information; handover-node access resource prediction accuracy information; a predicted measurement result; a predicted additional measurement result; a predicted neighboring-cell handover beam; a predicted measurement result time; and/or prediction accuracy information, and wherein the UE trajectory prediction information comprises at least one of: UE identification information; a predicted UE RRM measurement result; a predicted measurement result time; prediction accuracy information; node information; node access resource information; node access resource validity information; and/or node access resource prediction accuracy information.

More specifically, the UE may correspond to the UE 120 illustrated in FIG. 1. The at least one network node may correspond to the base station 110 and/or the network 130 (e.g., a first network node) illustrated in FIG. 1. The base station 110 may be, for example, a gNB. By way of example, in some embodiments of the present disclosure, the UE transmits, to at least one network node, first prediction measurement information predicted by the UE based on an Artificial Intelligence/Machine Learning (AI/ML) model and receives UE trajectory prediction information transmitted by the at least one network node and predicted by the at least one network node based on an Artificial Intelligence/Machine Learning (AI/ML) model. The first prediction measurement information and/or the UE trajectory prediction information may be used to represent information associated with a target handover node during a future period of time. Accordingly, an AI/ML algorithm may be utilized to predict a movement trajectory of the UE 120, thereby enabling more efficient wireless resource allocation and mobility management for the UE 120. The disclosed embodiments may further address shortcomings of conventional technologies. For example, conventional Radio Resource Management (RRM) measurement reporting mechanisms do not support reporting measurement results corresponding to future times. A UE may predict possible RRM measurement results at a future time based on historical information, which may result in misleading information. In addition, conventional handover procedures may suffer from handover latency.

FIG. 6 is a flowchart illustrating a wireless communication method according to an embodiment of the present application. As shown in FIG. 6, the wireless communication method may be applied to an AI/ML-based mobility handover RRM measurement mechanism and may comprise at least one of the following operations:
- UE AI/ML Mobility Capability Reporting: The capability reporting may comprise information indicating whether the UE supports AI/ML-based predicted RRM measurements and/or information indicating requirements on base-station-side resources (e.g., base-station load conditions and pilot-resource configurations) for supporting UE-side predicted RRM measurements. Detailed implementations may be found in the fifth embodiment. The UE AI/ML mobility capability reporting may comprise at least the following operations: Operation 1: receiving a prediction measurement capability request transmitted by the at least one network node. Operation 2: transmitting prediction measurement capability information to the at least one network node, wherein the prediction measurement capability information comprises at least one of: handover failure prediction support; radio link failure prediction support; cell-level RRM prediction support; beam-level RRM prediction support; cell-level handover prediction support; and/or beam-level handover prediction support.
- Predicted RRM Measurement Configuration: A gNB configures parameters associated with AI/ML-based predicted RRM measurements, including triggering events for prediction reporting. Detailed implementations may be found in the second embodiment and the fourth embodiment.
- Predicted RRM Measurement Reporting Content: Information elements used to support UE-side AI/ML mobility prediction reporting are defined to assist a base station in performing handover operations more effectively. Detailed implementations may be found in the first embodiment.
- Neighbor gNB Resource Reservation for a UE: A serving gNB (e.g., a source gNB) forwards predicted RRM measurement results to one or more related neighbor gNBs (e.g., target gNBs), thereby enabling the neighbor gNBs to reserve resources for the UE in advance. Detailed implementations may be found in the third embodiment.

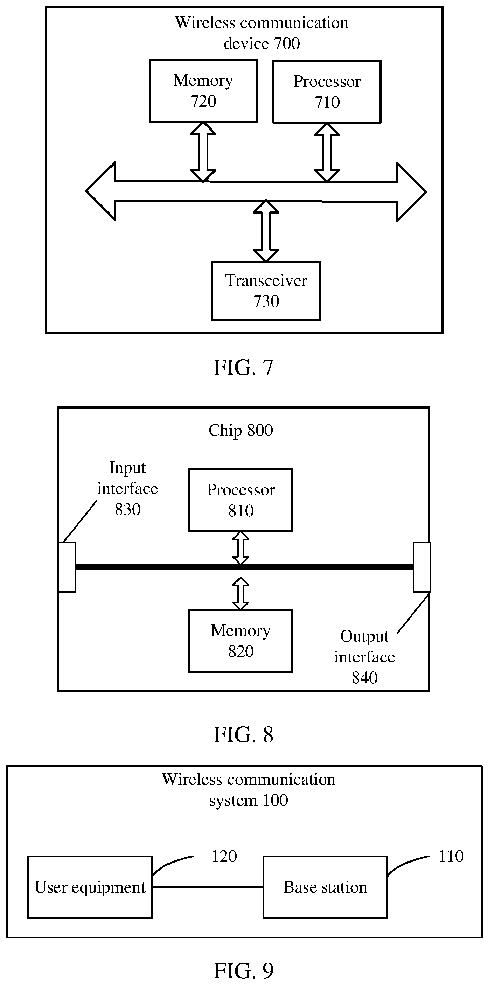

FIG. 7 is a schematic structural diagram of a wireless communication device 700 according to an embodiment of the present application. The wireless communication device 700 may be a user equipment, a base station, or a network entity. As illustrated in FIG. 7, the wireless communication device 700 comprises a processor 710. The processor 710 may invoke and execute computer programs stored in a memory to implement the methods described in the embodiments of the present application.

Optionally, as illustrated in FIG. 7, the wireless communication device 700 may further comprise a memory 720. The processor 710 may invoke and execute computer programs stored in the memory 720 to implement the methods described in the embodiments of the present application. The memory 720 may be a separate device independent of the processor 710 or may be integrated with the processor 710.

Optionally, as illustrated in FIG. 7, the wireless communication device 700 may further comprise a transceiver 730. The processor 710 may control the transceiver 730 to communicate with other devices. Specifically, the transceiver 730 may transmit information or data to other devices and/or receive information or data from other devices. The transceiver 730 may comprise a transmitter and a receiver. The transceiver 730 may further comprise one or more antennas.

Optionally, the wireless communication device 700 may be implemented as a base station according to embodiments of the present application. The wireless communication device 700 may perform corresponding processes implemented by a base station in the methods described herein. For brevity, details are omitted.

Optionally, the wireless communication device 700 may be implemented as a mobile user equipment/user equipment according to embodiments of the present application. The wireless communication device 700 may perform corresponding processes implemented by a mobile user equipment/user equipment in the methods described herein. For brevity, details are omitted.

Optionally, the wireless communication device 700 may be implemented as a network entity according to embodiments of the present application. The wireless communication device 700 may perform corresponding processes implemented by a network entity in the methods described herein. For brevity, details are omitted.

FIG. 8 is a schematic structural diagram of a chip 800 according to an embodiment of the present application. As illustrated in FIG. 8, the chip 800 comprises a processor 810. The processor 810 may invoke and execute computer programs stored in a memory to implement the methods described in the embodiments of the present application.

Optionally, as illustrated in FIG. 8, the chip 800 may further comprise a memory 820. The processor 810 may invoke and execute computer programs stored in the memory 820 to implement the methods described in the embodiments of the present application. The memory 820 may be a separate device independent of the processor 810 or may be integrated with the processor 810.

Optionally, the chip 800 may further comprise an input interface 830. The processor 810 may control the input interface 830 to communicate with other devices or chips. Specifically, the input interface 830 may receive information or data transmitted by other devices or chips.

Optionally, the chip 800 may further comprise an output interface 840. The processor 810 may control the output interface 840 to communicate with other devices or chips. Specifically, the output interface 840 may output information or data to other devices or chips.

Optionally, the chip may be applied to a base station according to embodiments of the present application, and the chip may perform corresponding processes implemented by the base station in the methods described herein. For brevity, details are omitted.

Optionally, the chip may be applied to a mobile user equipment/user equipment according to embodiments of the present application, and the chip may perform corresponding processes implemented by the mobile user equipment/user equipment in the methods described herein. For brevity, details are omitted.

Optionally, the chip may be applied to a network entity according to embodiments of the present application, and the chip may perform corresponding processes implemented by the network entity in the methods described herein. For brevity, details are omitted.

FIG. 9 is a schematic block diagram of a wireless communication system 100 according to an embodiment of the present application. As illustrated in FIG. 9, the wireless communication system 100 comprises a user equipment (UE) 120 and a base station 110. The user equipment 120 may be configured to perform corresponding functions implemented by a user equipment in the methods described herein, and the base station 110 may be configured to perform corresponding functions implemented by a base station in the methods described herein. For brevity, details are omitted.

It should be understood that the processor described in embodiments of the present application may comprise an integrated circuit chip having signal-processing capabilities. During implementation, the various steps of the methods described in the foregoing embodiments may be implemented by integrated logic circuits in hardware within the processor and/or by instructions in the form of software.

It should be understood that the memory described in embodiments of the present application may comprise a volatile memory, a non-volatile memory, or a combination thereof. It should be noted that the memory used in the systems and methods described herein is intended to include, but is not limited to, the foregoing types of memory and any other suitable type of memory. Embodiments of the present application further provide a computer-readable storage medium storing a computer program.

Optionally, the computer-readable storage medium may be applied to a base station according to embodiments of the present application, and the computer program causes a computer to perform corresponding processes implemented by the base station in the methods described herein. For brevity, details are omitted. Optionally, the computer-readable storage medium may be applied to a mobile user equipment/user equipment according to embodiments of the present application, and the computer program causes a computer to perform corresponding processes implemented by the mobile user equipment/user equipment in the methods described herein. For brevity, details are omitted.

Embodiments of the present application further provide a computer program product comprising computer program instructions.

Optionally, the computer program product may be applied to a base station according to embodiments of the present application, and the computer program instructions cause a computer to perform corresponding processes implemented by the base station in the methods described herein. For brevity, details are omitted. Optionally, the computer program product may be applied to a mobile user equipment/user equipment according to embodiments of the present application, and the computer program instructions cause a computer to perform corresponding processes implemented by the mobile user equipment/user equipment in the methods described herein. For brevity, details are omitted.

Embodiments of the present application further provide a computer program.

Optionally, the computer program may be applied to a base station according to embodiments of the present application. When executed by a computer, the computer program causes the computer to perform corresponding processes implemented by the base station in the methods described herein. For brevity, details are omitted. Optionally, the computer program may be applied to a mobile user equipment/user equipment according to embodiments of the present application. When executed by a computer, the computer program causes the computer to perform corresponding processes implemented by the mobile user equipment/user equipment in the methods described herein. For brevity, details are omitted.

Those of ordinary skill in the art will appreciate that the various illustrative units and algorithm steps described in connection with the embodiments disclosed herein may be implemented as electronic hardware, computer software, or a combination of electronic hardware and computer software. Whether such functionality is implemented in hardware or software depends upon the particular application and design constraints imposed on the overall system. Persons skilled in the art may implement the described functionality in various ways for particular applications. However, such implementation decisions should not be interpreted as causing a departure from the scope of the present application.

The foregoing descriptions are merely illustrative embodiments of the present application and are not intended to limit the scope of the present application. Any modifications, equivalent substitutions, improvements, or alterations made by those skilled in the art within the spirit and technical scope disclosed herein shall fall within the scope of protection of the present application. Accordingly, the scope of protection of the present application shall be defined by the appended claims.

## Claims

1. A method for wireless communication, performed by a user equipment (UE), wherein the method comprises:
transmitting, to at least one network node via a first message, first prediction measurement information predicted by the UE based on an artificial intelligence/machine learning (AI/ML) model,
wherein the first prediction measurement information comprises mobility information of the UE at a future time, and
wherein the mobility information of the UE at the future time comprises at least one of: AI/ML model identification information, handover node identification information, handover node access resource information, handover node access resource validity information, handover node access resource prediction accuracy information, a predicted measurement result, a predicted additional measurement result, a predicted neighboring-cell handover beam, a predicted measurement result time, and/or accuracy information.

2. The method according to claim 1, wherein the first message comprises radio resource management (RRM) signaling, radio resource control (RRC) signaling, or UE assistance information.

3. The method according to claim 1 or 2, wherein the AI/ML model identification information is used to indicate the AI/ML model utilized by the UE, and the AI/ML model identification information comprises at least one of: a model identifier (ID), a functional ID, a feature ID, and/or an RRC configuration ID.

4. The method according to any one of claims 1 to 3, wherein the handover node identification information is used to indicate identification information of a handover node, and the identification information of the handover node comprises at least one of: an area ID, a cell ID, a transmission and reception point (TRP) ID, and/or a tracking area (TA).

5. The method according to any one of claims 1 to 4, wherein the handover node access resource information is used to indicate resource information of the handover node for handover or access during a future period of time, and the handover node access resource information comprises at least one of: a reference signal periodicity, a time interval, a frequency-domain position, density information, a transmission duration, and/or a transmission power.

6. The method according to any one of claims 1 to 5, wherein the handover node access resource validity information is used to indicate at least one of: access resources corresponding to the handover node, or a validity time or a validity area of the handover node.

7. The method according to any one of claims 1 to 6, wherein the handover node access resource validity information comprises a first implementation mode or a second implementation mode,
wherein, in the first implementation mode, each access resource corresponds to one piece of access resource validity information for indicating an effective time of the corresponding access resource; and
wherein, in the second implementation mode, an order of access resources is used to indicate an effective-time sequence of the access resources and corresponding time intervals.

8. The method according to any one of claims 1 to 7, wherein the handover node access resource prediction accuracy information is used to indicate a prediction accuracy of access resources corresponding to the handover node or of the handover node.

9. The method according to any one of claims 1 to 8, wherein the handover node access resource prediction accuracy information comprises a first mode, a second mode, or a third mode,
wherein, in the first mode, all handover node access resources share one prediction accuracy;
wherein, in the second mode, each handover node access resource corresponds to one prediction accuracy; and
wherein, in the third mode, one or more of all handover node access resources share one prediction accuracy.

10. The method according to any one of claims 1 to 9, wherein the UE identification information comprises a Globally Unique User Identifier (GUI) or Radio Network Temporary Identifier (RNTI) information.

11. The method according to any one of claims 1 to 10, wherein the predicted additional measurement result comprises a measurement result of a beam measured by the UE when beam measurement is not configured for a serving cell.

12. The method according to any one of claims 1 to 11, wherein the predicted neighboring-cell handover beam comprises a beam expected to be used after handover to a neighboring cell.

13. The method according to any one of claims 1 to 12, wherein the predicted measurement result time comprises a time range associated with an expected measurement result, and wherein the predicted measurement result time is an absolute time or a relative time.

14. The method according to any one of claims 1 to 13, wherein the predicted measurement result time comprises at least one of: a start time of a predicted measurement-result time range, an end time of the predicted measurement-result time range, and/or a valid time window.

15. The method according to any one of claims 1 to 14, wherein the accuracy comprises at least one of: a measurement error range of a Reference Signal Received Power (RSRP) associated with the expected measurement result and/or a measurement error range of a time associated with the expected measurement result.

16. The method according to any one of claims 1 to 15, wherein, before transmitting the first prediction measurement information predicted by the UE based on the AI/ML model to the at least one network node via the first message, the method comprises:
receiving a prediction configuration transmitted by the at least one network node.

17. The method according to claim 16, wherein the prediction configuration comprises a triggering condition, the triggering condition being a condition for triggering transmission of the first prediction measurement information from the UE to the at least one network node, and wherein the triggering condition comprises at least one of: a prediction measurement event, a prediction measurement time, a prediction measurement lead time, and/or a current measurement result.

18. The method according to claim 16 or 17, wherein, when the prediction configuration is configured at a beam level, the first prediction measurement information is also at the beam level.

19. The method according to any one of claims 16 to 18, wherein, before receiving the prediction configuration transmitted by the at least one network node, the method comprises:
transmitting prediction measurement capability information to the at least one network node,
wherein the prediction measurement capability information comprises at least one of: handover failure prediction support, radio link failure prediction support, cell-level radio resource management (RRM) prediction support, beam-level RRM prediction support, cell-level handover prediction support, and/or beam-level handover prediction support.

20. The method according to claim 19, wherein the handover failure prediction support indicates a capability of the UE to support handover failure prediction, including whether the UE supports predicting when a handover failure will occur, and wherein the handover failure prediction support comprises node information and/or resource information and/or AI/ML model information.

21. The method according to claim 19 or 20, wherein the radio link failure prediction support indicates a capability of the UE to support radio link failure prediction, including whether the UE supports predicting when a radio link failure will occur, and wherein the radio link failure prediction support comprises node information and/or resource information and/or AI/ML model information.

22. The method according to any one of claims 19 to 21, wherein the cell-level radio resource management (RRM) prediction support indicates a capability of the UE to support RRM prediction, including whether the UE supports predicting cell-level RRM, and wherein the cell-level RRM prediction support comprises node information and/or resource information and/or AI/ML model information.

23. The method according to any one of claims 19 to 22, wherein the beam-level radio resource management (RRM) prediction support indicates a capability of the UE to support beam-level RRM prediction, including whether the UE supports predicting beam-level RRM, and wherein the beam-level RRM prediction support comprises node information and/or resource information and/or AI/ML model information.

24. The method according to any one of claims 19 to 23, wherein the cell-level handover prediction support indicates a capability of the UE to support cell-level handover prediction, including whether the UE supports predicting cell-level handovers, and wherein the cell-level handover prediction support comprises node information and/or resource information and/or AI/ML model information.

25. The method according to any one of claims 19 to 24, wherein the beam-level handover prediction support indicates a capability of the UE to support beam-level handover prediction, including whether the UE supports predicting beam-level handovers, and wherein the beam-level handover prediction support comprises node information and/or resource information and/or AI/ML model information.

26. The method according to any one of claims 19 to 25, wherein the node information indicates that a corresponding prediction capability is supported for a specific node, and the resource information indicates that the corresponding prediction capability is supported for a specific resource,
wherein the node information comprises at least one of: a cell identifier (ID), a transmission and reception point (TRP) ID, a tracking area (TA), a scenario ID, and/or an area ID; and
wherein the resource information comprises at least one of: beam information, bandwidth information, and/or frequency-point information.

27. The method according to any one of claims 19 to 26, wherein, before transmitting the prediction measurement capability information to the at least one network node, the method comprises:
receiving a prediction measurement capability request transmitted by the at least one network node.

28. The method according to claim 27, wherein the prediction measurement capability request is used to request the UE to report an RRM prediction capability.

29. The method according to any one of claims 1 to 28, wherein the UE assists the at least one network node in performing configuration through UE assistance information.

30. A method for wireless communication, performed by a user equipment (UE), wherein the method comprises:
receiving, from at least one network node, UE trajectory prediction information predicted by the at least one network node based on an artificial intelligence/machine learning (AI/ML) model,
wherein the UE trajectory prediction information comprises at least one of: UE identification information, a predicted UE radio resource management (RRM) measurement result, a predicted measurement result time, prediction accuracy information, node information, node access resource information, node access resource validity information, and/or node access resource prediction accuracy information.

31. The method according to claim 30, wherein the UE identification information comprises a Globally Unique User Identifier (GUI) or Radio Network Temporary Identifier (RNTI) information.

32. The method according to claim 30 or 31, wherein the predicted UE radio resource management (RRM) measurement result time comprises a time range associated with an expected measurement result, and wherein the predicted measurement result time is an absolute time or a relative time.

33. The method according to any one of claims 30 to 32, wherein the predicted measurement result time comprises at least one of: a start time of a predicted measurement-result time range, an end time of the predicted measurement-result time range, and/or a valid time window.

34. The method according to any one of claims 30 to 33, wherein the prediction accuracy information comprises at least one of: a measurement error range of a Reference Signal Received Power (RSRP) associated with the expected measurement result and/or a measurement error range of a time associated with the expected measurement result.

35. The method according to any one of claims 30 to 34, wherein the node information is used to indicate identification information of a handover node, and wherein the node information comprises at least one of: an area identifier (ID), a cell ID, a transmission and reception point (TRP) ID, and/or a tracking area (TA).

36. The method according to any one of claims 30 to 35, wherein the node access resource information is used to indicate resources of a handover node for handover or access during a future period of time, and wherein the node access resource information comprises at least one of: a beam, spectrum, and/or bandwidth.

37. The method according to any one of claims 30 to 36, wherein the node access resource validity information is used to indicate access resources corresponding to a handover node, or a validity time or a validity area of the handover node.

38. The method according to any one of claims 30 to 37, wherein the node access resource validity information comprises a first implementation mode or a second implementation mode,
wherein, in the first implementation mode, each access resource corresponds to one piece of access resource validity information for indicating an effective time of the corresponding access resource; and
wherein, in the second implementation mode, an order of access resources is used to indicate an effective-time sequence of the access resources and corresponding time intervals.

39. The method according to any one of claims 30 to 38, wherein the node access resource prediction accuracy information is used to indicate a prediction accuracy of access resources corresponding to the handover node or of the handover node.

40. The method according to any one of claims 30 to 39, wherein the node access resource prediction accuracy information comprises a first mode, a second mode, or a third mode,
wherein, in the first mode, all handover-node access resources share one prediction accuracy;
wherein, in the second mode, each handover-node access resource corresponds to one prediction accuracy; and
wherein, in the third mode, one or more of all handover-node access resources share one prediction accuracy.

41. The method according to any one of claims 30 to 40, wherein the UE assists the at least one network node in performing configuration through UE assistance information.

42. A method for wireless communication, performed by at least one network node, wherein the method comprises:
receiving, via a first message from a user equipment (UE), first prediction measurement information predicted by the UE based on an artificial intelligence/machine learning (AI/ML) model,
wherein the first prediction measurement information comprises mobility information of the UE at a future time, and
wherein the mobility information of the UE at the future time comprises at least one of: AI/ML model identification information, handover node identification information, handover node access resource information, handover node access resource validity information, handover node access resource prediction accuracy information, a predicted measurement result, a predicted additional measurement result, a predicted neighboring-cell handover beam, a predicted measurement result time, and/or accuracy information.

43. The method according to claim 42, wherein the first message comprises radio resource management (RRM) signaling, radio resource control (RRC) signaling, or UE assistance information.

44. The method according to claim 42 or 43, wherein the AI/ML model identification information is used to indicate the AI/ML model utilized by the UE, and the AI/ML model identification information comprises at least one of: a model identifier (ID), a functional ID, a feature ID, and/or an RRC configuration ID.

45. The method according to any one of claims 42 to 44, wherein the handover node identification information is used to indicate identification information of a handover node, and the identification information of the handover node comprises at least one of: an area ID, a cell ID, a transmission and reception point (TRP) ID, and/or a tracking area (TA).

46. The method according to any one of claims 42 to 45, wherein the handover node access resource information is used to indicate resource information of the handover node for handover or access during a future period of time, and the handover node access resource information comprises at least one of: a reference signal periodicity, a time interval, a frequency-domain position, density information, a transmission duration, and/or a transmission power.

47. The method according to any one of claims 42 to 46, wherein the handover node access resource validity information is used to indicate at least one of: access resources corresponding to the handover node, or a validity time or a validity area of the handover node.

48. The method according to any one of claims 42 to 47, wherein the handover node access resource validity information comprises a first implementation mode or a second implementation mode,
wherein, in the first implementation mode, each access resource corresponds to one piece of access resource validity information for indicating an effective time of the corresponding access resource; and
wherein, in the second implementation mode, an order of access resources is used to indicate an effective-time sequence of the access resources and corresponding time intervals.

49. The method according to any one of claims 42 to 48, wherein the handover node access resource prediction accuracy information is used to indicate a prediction accuracy of access resources corresponding to the handover node or of the handover node.

50. The method according to any one of claims 42 to 49, wherein the handover node access resource prediction accuracy information comprises a first mode, a second mode, or a third mode,
wherein, in the first mode, all handover node access resources share one prediction accuracy;
wherein, in the second mode, each handover node access resource corresponds to one prediction accuracy; and
wherein, in the third mode, one or more of all handover node access resources share one prediction accuracy.

51. The method according to any one of claims 42 to 50, wherein the UE identification information comprises a Globally Unique User Identifier (GUI) or Radio Network Temporary Identifier (RNTI) information.

52. The method according to any one of claims 42 to 51, wherein the predicted additional measurement result comprises a measurement result of a beam measured by the UE when beam measurement is not configured for a serving cell.

53. The method according to any one of claims 42 to 52, wherein the predicted neighboring-cell handover beam comprises a beam expected to be used after handover to a neighboring cell.

54. The method according to any one of claims 42 to 53, wherein the predicted measurement result time comprises a time range associated with an expected measurement result, and wherein the predicted measurement result time is an absolute time or a relative time.

55. The method according to any one of claims 42 to 54, wherein the predicted measurement result time comprises at least one of: a start time of a predicted measurement-result time range, an end time of the predicted measurement-result time range, and/or a valid time window.

56. The method according to any one of claims 42 to 55, wherein the accuracy comprises at least one of: a measurement error range of a Reference Signal Received Power (RSRP) associated with the expected measurement result and/or a measurement error range of a time associated with the expected measurement result.

57. The method according to any one of claims 42 to 56, wherein, before receiving the first prediction measurement information predicted by the UE based on the AI/ML model via the first message, the method comprises:
transmitting a prediction configuration to the UE.

58. The method according to claim 57, wherein the prediction configuration comprises a triggering condition, the triggering condition being a condition for triggering transmission of the first prediction measurement information from the UE to the at least one network node, and wherein the triggering condition comprises at least one of: a prediction measurement event, a prediction measurement time, a prediction measurement lead time, and/or a current measurement result.

59. The method according to claim 57 or 58, wherein, when the prediction configuration is configured at a beam level, the first prediction measurement information is also at the beam level.

60. The method according to any one of claims 57 to 59, wherein, before transmitting the prediction configuration to the UE, the method comprises:
receiving prediction measurement capability information transmitted by the UE,
wherein the prediction measurement capability information comprises at least one of: handover failure prediction support, radio link failure prediction support, cell-level radio resource management (RRM) prediction support, beam-level RRM prediction support, cell-level handover prediction support, and/or beam-level handover prediction support.

61. The method according to claim 60, wherein the handover failure prediction support indicates a capability of the UE to support handover failure prediction, including whether the UE supports predicting when a handover failure will occur, and wherein the handover failure prediction support comprises node information and/or resource information and/or AI/ML model information.

62. The method according to claim 60 or 61, wherein the radio link failure prediction support indicates a capability of the UE to support radio link failure prediction, including whether the UE supports predicting when a radio link failure will occur, and wherein the radio link failure prediction support comprises node information and/or resource information and/or AI/ML model information.

63. The method according to any one of claims 60 to 62, wherein the cell-level radio resource management (RRM) prediction support indicates a capability of the UE to support RRM prediction, including whether the UE supports predicting cell-level RRM, and wherein the cell-level RRM prediction support comprises node information and/or resource information and/or AI/ML model information.

64. The method according to any one of claims 60 to 63, wherein the beam-level radio resource management (RRM) prediction support indicates a capability of the UE to support beam-level RRM prediction, including whether the UE supports predicting beam-level RRM, and wherein the beam-level RRM prediction support comprises node information and/or resource information and/or AI/ML model information.

65. The method according to any one of claims 60 to 64, wherein the cell-level handover prediction support indicates a capability of the UE to support cell-level handover prediction, including whether the UE supports predicting cell-level handovers, and wherein the cell-level handover prediction support comprises node information and/or resource information and/or AI/ML model information.

66. The method according to any one of claims 60 to 65, wherein the beam-level handover prediction support indicates a capability of the UE to support beam-level handover prediction, including whether the UE supports predicting beam-level handovers, and wherein the beam-level handover prediction support comprises node information and/or resource information and/or AI/ML model information.

67. The method according to any one of claims 60 to 66, wherein the node information indicates that a corresponding prediction capability is supported for a specific node, and the resource information indicates that the corresponding prediction capability is supported for a specific resource,
wherein the node information comprises at least one of: a cell identifier (ID), a transmission and reception point (TRP) ID, a tracking area (TA), a scenario ID, and/or an area ID; and
wherein the resource information comprises at least one of: beam information, bandwidth information, and/or frequency-point information.

68. The method according to any one of claims 60 to 67, wherein, before receiving the prediction measurement capability information transmitted by the UE, the method comprises:
transmitting a prediction measurement capability request to the UE.

69. The method according to claim 68, wherein the prediction measurement capability request is used to request the UE to report an RRM prediction capability.

70. The method according to any one of claims 42 to 69, wherein the at least one network node receives UE assistance information transmitted by the UE, and wherein the UE assistance information is used to assist the at least one network node in performing configuration.

71. The method according to any one of claims 42 to 70, wherein the at least one network node comprises a first base station and a second base station, and the method further comprises:
transmitting, by the first base station to the second base station, second prediction measurement information,
wherein the second prediction measurement information comprises mobility information of the UE at a future time, and
wherein the mobility information of the UE at the future time comprises at least one of: AI/ML model identification information, handover node identification information, handover node access resource information, handover node access resource validity information, handover node access resource prediction accuracy information, a predicted measurement result, a predicted additional measurement result, a predicted neighboring-cell handover beam, a predicted measurement result time, and/or accuracy information.

72. The method according to claim 71, wherein the at least one network node further comprises a first network node, and the method further comprises:
receiving, by the first base station from the UE, the second prediction measurement information,
wherein the second prediction measurement information comprises prediction measurement information predicted by the UE based on an AI/ML model or prediction measurement information predicted by the first network node based on an AI/ML model.

73. The method according to claim 71, wherein the at least one network node further comprises a first network node, and the method further comprises:
receiving, by the first base station from the first network node, the second prediction measurement information,
wherein the second prediction measurement information comprises prediction measurement information predicted by the UE based on an AI/ML model or prediction measurement information predicted by the first network node based on an AI/ML model.

74. A method for wireless communication, performed by at least one network node, wherein the method comprises:
transmitting, to a user equipment (UE), UE trajectory prediction information predicted by the at least one network node based on an artificial intelligence/machine learning (AI/ML) model,
wherein the UE trajectory prediction information comprises at least one of: UE identification information, a predicted UE radio resource management (RRM) measurement result, a predicted measurement result time, prediction accuracy information, node information, node access resource information, node access resource validity information, and/or node access resource prediction accuracy information.

75. The method according to claim 74, wherein the UE identification information comprises a Globally Unique User Identifier (GUI) or Radio Network Temporary Identifier (RNTI) information.

76. The method according to claim 74 or 75, wherein the predicted UE radio resource management (RRM) measurement result time comprises a time range associated with an expected measurement result, and wherein the predicted measurement result time is an absolute time or a relative time.

77. The method according to any one of claims 74 to 76, wherein the predicted measurement result time comprises at least one of: a start time of a predicted measurement-result time range, an end time of the predicted measurement-result time range, and/or a valid time window.

78. The method according to any one of claims 74 to 77, wherein the prediction accuracy information comprises at least one of: a measurement error range of a Reference Signal Received Power (RSRP) associated with the expected measurement result and/or a measurement error range of a time associated with the expected measurement result.

79. The method according to any one of claims 74 to 78, wherein the node information is used to indicate identification information of a handover node, and wherein the node information comprises at least one of: an area identifier (ID), a cell ID, a transmission and reception point (TRP) ID, and/or a tracking area (TA).

80. The method according to any one of claims 74 to 79, wherein the node access resource information is used to indicate resources of a handover node for handover or access during a future period of time, and wherein the node access resource information comprises at least one of: a beam, spectrum, and/or bandwidth.

81. The method according to any one of claims 74 to 80, wherein the node access resource validity information is used to indicate access resources corresponding to a handover node, or a validity time or a validity area of the handover node.

82. The method according to any one of claims 74 to 81, wherein the node access resource validity information comprises a first implementation mode or a second implementation mode,
wherein, in the first implementation mode, each access resource corresponds to one piece of access resource validity information for indicating an effective time of the corresponding access resource; and
wherein, in the second implementation mode, an order of access resources is used to indicate an effective-time sequence of the access resources and corresponding time intervals.

83. The method according to any one of claims 74 to 82, wherein the node access resource prediction accuracy information is used to indicate a prediction accuracy of access resources corresponding to the handover node or of the handover node.

84. The method according to any one of claims 74 to 83, wherein the node access resource prediction accuracy information comprises a first mode, a second mode, or a third mode,
wherein, in the first mode, all handover-node access resources share one prediction accuracy;
wherein, in the second mode, each handover-node access resource corresponds to one prediction accuracy; and
wherein, in the third mode, one or more of all handover-node access resources share one prediction accuracy.

85. The method according to any one of claims 74 to 84, wherein the at least one network node receives UE assistance information transmitted by the UE, and wherein the UE assistance information is used to assist the at least one network node in performing configuration.

86. The method according to any one of claims 74 to 85, wherein the at least one network node comprises a base station and a first network node, and the method further comprises:
obtaining, by the base station from the first network node, the UE trajectory prediction information.

87. The method according to claim 86, wherein the UE trajectory prediction information obtained by the base station from the first network node comprises at least one of: the UE identification information, the predicted UE radio resource management (RRM) measurement result, the predicted measurement result time, and/or the prediction accuracy information.

88. The method according to any one of claims 74 to 85, wherein the at least one network node comprises a base station and a first network node, and the method further comprises:
after obtaining the UE trajectory prediction information from the first network node, transmitting, by the base station to the UE, the UE trajectory prediction information.

89. The method according to claim 88, wherein the UE trajectory prediction information transmitted by the base station to the UE after obtaining the UE trajectory prediction information from the first network node comprises at least one of: the node information, the node access resource information, the node access resource validity information, and/or the node access resource prediction accuracy information.

90. The method according to any one of claims 74 to 85, wherein the at least one network node comprises a first base station and a second base station, and the method further comprises:
transmitting, by the first base station to the second base station, second prediction measurement information,
wherein the second prediction measurement information comprises mobility information of the UE at a future time, and
wherein the mobility information of the UE at the future time comprises at least one of: AI/ML model identification information, handover node identification information, handover node access resource information, handover node access resource validity information, handover node access resource prediction accuracy information, a predicted measurement result, a predicted additional measurement result, a predicted neighboring-cell handover beam, a predicted measurement result time, and/or accuracy information.

91. The method according to claim 90, wherein the at least one network node further comprises a first network node, and the method further comprises:
receiving, by the first base station from the UE, the second prediction measurement information,
wherein the second prediction measurement information comprises prediction measurement information predicted by the UE based on an AI/ML model or prediction measurement information predicted by the first network node based on an AI/ML model.

92. The method according to claim 90, wherein the at least one network node further comprises a first network node, and the method further comprises:
receiving, by the first base station from the first network node, the second prediction measurement information,
wherein the second prediction measurement information comprises prediction measurement information predicted by the UE based on an AI/ML model or prediction measurement information predicted by the first network node based on an AI/ML model.

93. A wireless communication device, comprising:
a processor; and
a memory storing computer-executable instructions,
wherein the processor is configured to execute the computer-executable instructions stored in the memory to perform the method according to any one of claims 1 to 92.
